# EUROPEAN PATENT APPLICATION

(11) **EP 2 666 534 A1**
(43) Date of publication of application: **27.11.2013**
(21) Application number: 12736953.6
(22) Date of filing: 19.01.2012
(51) Int. Cl.: B01D 53/04, B65D 77/30, B67B 7/46, F16L 59/06

(54) **GAS-ADSORBING DEVICE AND EVACUATED INSULATING MATERIAL PROVIDED WITH SAME**

(30) Priority: 20.01.2011 JP 2011009628; 25.01.2011 JP 2011012595; 14.02.2011 JP 2011028212
(71) Applicant: Panasonic Corporation, Osaka 571-8501 (JP)
(72) Inventor: KOSHIYAMA, Masahiro, Osaka 540-6207 (JP); TAKANO, Takashi, Osaka 540-6207 (JP); KOJIMA, Shinya, Osaka 540-6207 (JP); KAWANISHI, Kazuhiro, Osaka 540-6207 (JP)
(74) Representative: Eisenführ, Speiser & Partner
(86) International application number: PCT/JP2012/000325
(87) International publication number: WO 2012/098896

(57) **Abstract**

A gas-adsorbing device of the present invention includes: a gas-adsorbing material; a gas barrier housing container having a long and narrow, flat, cylindrical body in which the gas-adsorbing material is sealed under reduced pressure; and an opening member that is attached so as to go around the housing container about an axis in a lengthwise direction of the housing container, the opening member including a protrusion that makes a through-hole in the housing container. The opening member includes: a retention unit that grips an outer circumferential surface of the cylindrical body in a width direction of the housing container, the retention unit circumferentially surrounding the outer circumferential surface of the cylindrical body so as to cover at least a portion, on which the protrusion entering the housing container has a possibility to abut from an inside of the housing container, in a surface on an opposite side to a surface in which the through-hole is made; and a movable unit in which a fixed end is coupled to the retention unit, the protrusion being formed at a free end of the movable unit. The movable unit is, before opening, opposed to the surface in which the through-hole is made at some interval while inclined at a predetermined angle, when the retention unit grips the housing container in the width direction. The protrusion pierces through the surface in which the through-hole is made, when the movable unit is pushed by a predetermined force during opening in a direction in which the protrusion comes close to the surface in which the through-hole is made.

## Description

### Technical Field

The present invention relates to a gas-adsorbing device and a vacuum insulation panel provided with same.

### Background Art

Nowadays, an energy-saving promotion becomes increasingly active as a countermeasure against global warming that is one global environmental problem. Particularly, as to heating and cooling devices, a vacuum insulation panel having an excellent heat insulating performance is becoming increasingly common from the viewpoint of efficient use of heat. In the vacuum insulation panel, a core material, such as glass wool, which has a high gas-phase volume ratio to form fine air gaps, is accommodated in a gas barrier laminate film formed into a pouched shape, and the laminate film is sealed under reduced pressure. An air gap diameter of the core material is reduced smaller than a mean free path of a gas molecule under reduced pressure, which decreases a gas heat conduction component of the vacuum insulation panel. Particularly, an influence of a convection heat transfer component is negligible in the case that the air gap diameter is as extremely small as about 1 mm. Additionally, because an influence of a radiation component is extremely low around room temperature, a solid heat conduction component of the core material and the slightly remaining gas heat conduction component become dominant as the heat conduction component in the vacuum insulation panel. Therefore, the thermal conductivity of the vacuum insulation panel is considered to be extremely lower than that of other heat insulation panels.

However, when air invades gradually into the vacuum insulation panel through the laminate film, unfortunately the gas heat conduction component increases to gradually increase a thermal conductivity of the vacuum insulation panel. In order to solve the problem, there is proposed a technology of opening a hardly-gas-permeable container after a gas-adsorbing material that is sealed in the hardly-gas-permeable container under reduced pressure is sealed in the laminate film under reduced pressure together with the core material (for example, see PTL 1).

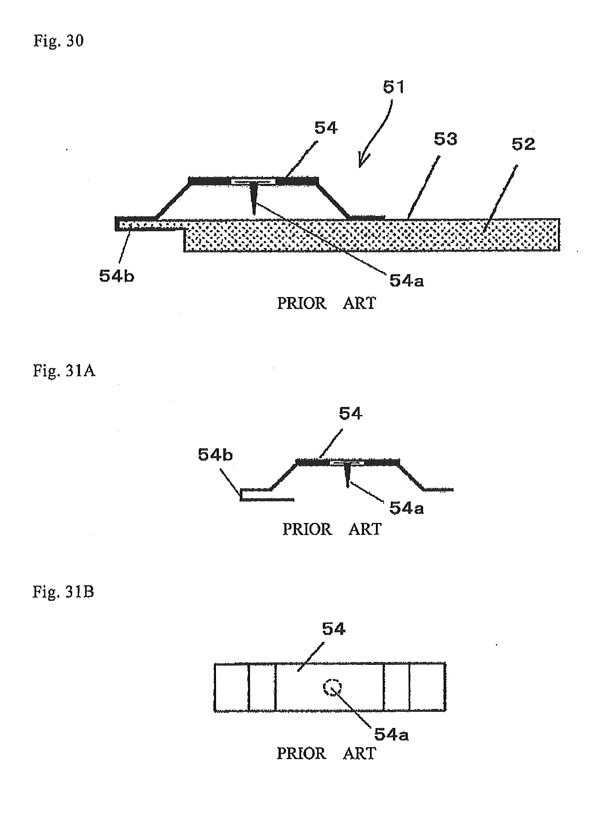

A conventional gas-adsorbing device disclosed in PTL 1 will be described below with reference to Figs. 30 and 31. Fig. 30 is a sectional view of the conventional gas-adsorbing device disclosed in PTL 1, Fig. 31A is a sectional view of an opening member used in the conventional gas-adsorbing device, and Fig. 31B is a plan view of the opening member used in the conventional gas-adsorbing device.

As illustrated in Figs. 30 and 31, a conventional gas-adsorbing device 51 disclosed in PTL 1 is configured such that a through-hole is made in a gas barrier housing container 53 in which a gas-adsorbing material 52 is sealed under reduced pressure using an opening member 54 disposed outside the housing container 53, whereby the gas around the housing container 53 can be adsorbed to the gas-adsorbing material 52 through the through-hole.

In the opening member 54, one of surfaces is formed convex while the other surface is formed concave, a metallic protrusion 54a slightly shorter than a depth of a recess of the concave surface in a state in which an external force pressing the convex surface is not applied is provided in the concave surface. The opening member 54 is made of a polypropylene resin. When the external force pressing the convex surface is applied, the polypropylene resin can be deformed such that the protrusion 54a is longer than the depth of the recess. The housing container 53 in which the gas-adsorbing material 52 is sealed under reduced pressure is disposed on the concave surface side on which the protrusion 54a is provided. When the convex surface is pressed by a force comparable to an atmospheric pressure, the protrusion 54a of the opening member 54 comes into contact with the housing container 53, and then pierces through the housing container 53. As illustrated in Figs. 30 and 31A, in a state in which a stress is not applied to the convex surface, a retention unit 54b molded into a U-shape is provided such that it can hold the housing container 53 in one of two portions between which the convex and concave portion is sandwiched.

Because the gas-adsorbing material 52 is sealed in the gas barrier housing container 53 under reduced pressure, the gas-adsorbing material 52 is not exposed to air even if the gas-adsorbing device 51 is left for a long time in the atmosphere. Therefore, deactivation of the gas-adsorbing material 52 can be suppressed to retain the gas-adsorbing device 51 in the atmosphere for a long time. For the similar reason, the deactivation can be suppressed during production.

Because of the flexibility, the laminate film that covers the core material of the vacuum insulation panel is deformed by the atmospheric pressure that is applied after the core material is sealed under reduced pressure, and the laminate film applies a compression force to the gas-adsorbing device 51. As a result, because the protrusion 54a applies a piercing force to the housing container 53, the through-hole is made in the housing container 53, which allows the gas in the laminate film to adsorb to the gas-adsorbing material 52 in the housing container 53.

A portion except the protrusion 54a of the opening member 54 is made of a polypropylene resin and is easy to deform. Therefore, the protrusion 54a is pressed against the housing container 53. Because the metallic protrusion 54a has sufficient strength, the through-hole is made in the housing container 53.

Thus, the inside of the housing container 53 and the inside of the laminate film are communicated with each other, and the gas in the laminate film can be adsorbed to the gas-adsorbing material 52 in the housing container 53.

### Patent Literature

**PTL 1: Japanese Laid-Open Patent Application Publication No.** 2009-052649

### Summary of Invention

### Technical Problem

In the opening member 54 of the conventional gas-adsorbing device 51 disclosed in PTL 1, the retention unit 54b that retains the housing container 53 is formed into U-shape by molding one of two legs that are in contact with the housing container 53. Therefore, a force (a frictional force) of the retention unit 54b to hold the housing container 53 changes due to a variation in size of at least one of a portion held by the retention unit 54b in the housing container 53 and a portion of the retention unit 54b holding the housing container 53 or a state of a surface in which the retention unit 54b and the housing container 53 are in contact with each other. The force (a frictional force) of the retention unit 54b to hold the housing container 53 is weakened in the case that the opening member 54 is displaced (moved) onto the side of the retention unit 54b. The retention unit 54b cannot hold the housing container 53 when the opening member 54 is largely displaced (moved) onto the side of the retention unit 54b.

Accordingly, in the configuration of the conventional gas-adsorbing device 51, unfortunately an organic connection is poor between the opening member 54 and the housing container 53 (the opening member 54 is easily displaced with respect to the housing container 53), and it is difficult to stably open the housing container 53 using the opening member 54.

### Solution to Problem

In order to solve the problem, a gas-adsorbing device of the present invention includes: a gas barrier housing container having a long and narrow, flat, cylindrical body in which a gas-adsorbing material is sealed under reduced pressure; and an opening member that is attached so as to go around the housing container about an axis in a lengthwise direction of the housing container, the opening member including a pressing unit that presses the housing container.

In the configuration, the opening member is attached so as to go around the housing container about the axis in the lengthwise direction of the housing container, and the opening member is hardly displaced (turned away) even if an external force is provided in all directions of the housing container. Therefore, the organic connection is strong between the opening member and the housing container, and it is easy to stably open the housing container using the opening member.

In order to solve the problem, a gas-adsorbing device is configured such that, using a protrusion disposed outside a gas barrier housing container, a through-hole is made in the housing container having a long and narrow, flat, cylindrical body in which a gas-adsorbing material is sealed under reduced pressure, whereby the gas around the housing container can be adsorbed to the gas-adsorbing material through the through-hole.

The opening member includes: a retention unit that grips an outer circumferential surface of the cylindrical body in a width direction of the housing container, the retention unit circumferentially surrounding the outer circumferential surface of the cylindrical body so as to cover at least a portion, on which the protrusion entering the housing container has a possibility to abut from an inside of the housing container, in a surface on an opposite side to a surface in which the through-hole is made; and a movable unit in which a fixed end is coupled to the retention unit, the protrusion being formed at a free end of the movable unit.

The movable unit is, before opening, opposed to the surface in which the through-hole is made at some interval while inclined at a predetermined angle, when the retention unit grips the housing container in the width direction, and the protrusion pierces through the surface in which the through-hole is made, when the movable unit is pushed by a predetermined force in a direction in which the protrusion comes close to the surface in which the through-hole is made.

As described above, the opening member includes the retention unit, which grips the outer circumferential surface of the cylindrical body of the housing container in the width direction of the housing container and circumferentially surrounds the outer circumferential surface of the cylindrical body so as to cover at least a portion in the surface on the opposite side to the surface in which the through-hole is made. Therefore, the opening member is hardly turned away from the housing container, and the opening member and the housing container can easily be handled as an integral member. In other words, the opening member is hardly displaced (turned away) even if the external force is provided in all directions of the housing container. Therefore, the organic connection is strong between the opening member and the housing container, and it is easy to stably open the housing container using the opening member.

In the opening member, the retention unit covers at least a portion, on which the protrusion entering the housing container has a possibility to abut from the inside of the housing container, in the surface on the opposite side to the surface in which the through-hole is made. Therefore, there is no risk that the protrusion of the opening member piercing through the housing container breaks other members.

The opening member includes: a retention unit that grips the housing container in the width direction, the retention unit circumferentially surrounding the outer circumferential surface of the housing container so as to cover at least a portion in a surface on an opposite side to a surface in which the through-hole is made; and the movable unit in which a fixed end is coupled to the retention unit, the protrusion being formed at a free end of the movable unit, and the protrusion pierces through the surface in which the through-hole is made, when the movable unit is pushed by a predetermined force in a direction in which the protrusion comes close to the surface in which the through-hole is made. Therefore, because the external force necessary for opening hardly varies, there is a low possibility of carelessly pushing the opening member to open the gas-adsorbing device.

A deformation (a displacement) of the housing container in a thickness direction (the pressing direction of the protrusion) by the pressing force of the protrusion can be suppressed to a lower level to decrease generation of a trouble such that, because the housing container is displaced in the thickness direction by the pressing force of the protrusion, the protrusion cannot make the through-hole in the housing container even if the movable unit performs the predetermined displacement.

The opening member is constructed by bending an elastically-deformable and bending-workable flat plate in which one end constituting the free end has a pointed shape. Therefore, the opening member can be produced at low cost, and production cost of the gas-adsorbing device can be reduced using the opening member.

In the gas-adsorbing device of the present invention, the opening member and the housing container can easily be handled as the integral member, the variation of the external force necessary for opening is hardly generated. Therefore, there is the low possibility of carelessly pushing the opening member to open the gas-adsorbing device, the generation of the trouble in which the protrusion cannot make the through-hole in the housing container even if the movable unit performs the predetermined displacement can be decreased, there is no risk that the protrusion of the opening member piercing through the housing container breaks other members, and the production cost can be reduced.

The protrusion has a shape such that a gap in which gas around the housing container is adsorbed to the gas-adsorbing material can be formed between the protrusion and an edge of the through-hole, which is made in a manner such that the protrusion enters the housing container, even if a state in which the protrusion enters the housing container is maintained.

Therefore, after the through-hole is made in the housing container using the protrusion, even if the protrusion is not separated from the housing container but the protrusion maintains the state in which the protrusion enters the housing container, the gas-adsorbing device can sufficiently exert an original function after opening.

In order to solve the problem, a gas-adsorbing device according to another embodiment includes: a gas-adsorption material; a gas barrier housing container in which the gas-adsorption material is accommodated, the housing container having a substantially flat cylindrical shape in which an aperture is provided at one end in a lengthwise direction; a gas barrier encapsulant that closes the aperture while at least part of the encapsulant is disposed in the aperture; and an opening member that includes at least one convex unit in one of surfaces opposed to each other and at least one concave unit in a portion opposed to the convex unit in the other surface, the opening member being attached to the housing container such that surfaces, which form the aperture while being opposed to each other, are gripped by the surfaces in which the convex unit and the concave unit are formed.

When a predetermined external force is applied to the opening member in a direction in which the surfaces, which form the aperture while being opposed to each other, are gripped, the convex unit and the concave unit come close to each other, the encapsulant is broken by a bending force of convex and concave shapes of the opening member, and a space outside the container and a space where the gas-adsorption material is accommodated are communicated with each other.

In the configuration, until the gas-adsorbing device is used in the gas adsorption, the gas-adsorbing material is accommodated in the gas barrier housing container (for example, the aluminum container) including the aperture at one end, and the aperture of the housing container is sealed by the gas barrier encapsulant (for example, the encapsulant made of glass) disposed in the aperture.

Until the gas-adsorbing device of the present invention is opened, the gas-adsorbing material in the gas-adsorbing device is not in contact with atmospheric air but covered with the gas barrier housing container and the gas barrier encapsulant, so that the gas-adsorbing performance of the gas-adsorbing material is maintained. For example, gas-adsorbing materials, such as copper-ion-exchanged ZSM-5 zeolite, which have a wide surface area exposed to air and sufficient gas adsorption rate and gas-adsorbing performance while special working such as pressing is not performed, can be used as the gas-adsorbing material accommodated in the housing container.

In the case that the gas-adsorbing device is used in the gas adsorption, a predetermined external force is applied to the opening member that is attached so as to grip the two surfaces, which form the aperture of the housing container while being opposed to each other, which allows the bending force of the convex and concave shapes of the opening member to break the encapsulant in the aperture to easily open the gas-adsorbing device.

The proper setting of the external force necessary for opening can prevent the gas-adsorbing device from being carelessly opened using the opening member.

Accordingly, the gas-adsorbing device of the present invention is easily handled in the atmosphere, the gas-adsorbing device can easily be opened by applying the predetermined external force to the opening member. After opening, the gas outside the housing container in the space where the gas-adsorbing device is disposed can be adsorbed to the gas-adsorbing material in the housing container at a sufficient gas adsorption rate, and a degree of vacuum of the closed space where the gas-adsorbing device is disposed can be maintained over a long term.

The present invention has been devised in order to solve the above problem and an object thereof is to properly provide a gas-adsorbing device that has the strong organic connection between the housing container and the opening member to implement the stable opening of the housing container, and a vacuum insulation panel provided therewith. Specifically, an object of the present invention is to provide a gas-adsorbing device having easy handling, high opening reliability, a wide application range, and low production cost. Another object of the present invention is to provide a gas-adsorbing device in which, after the through-hole is made in the housing container using the protrusion, even if the protrusion is not separated from the housing container but the protrusion maintains the state in which the protrusion enters the housing container, the gas-adsorbing device can sufficiently exert an original function after opening. Still another object of the present invention is to provide a gas-adsorbing device that is easily handled in the atmosphere, can easily be opened by applying the predetermined external force to the opening member, after opening, can cause the gas outside the housing container in the space where the gas-adsorbing device is disposed to adsorb to the gas-adsorbing material in the housing container at a sufficient gas adsorption rate, and can maintain a degree of vacuum of the closed space where the gas-adsorbing device is disposed over a long term.

The above object, other objects, features and advantages of the present invention will become clear by the following detailed description of preferred embodiments with reference to the accompanying drawings.

### Advantageous Effects of Invention

Accordingly, the present invention can provide the gas-adsorbing device that has the strong organic connection between the housing container and the opening member to implement the stable opening of the housing container, and the vacuum insulation panel provided therewith. Specifically, the present invention can provide the gas-adsorbing device having the easy handling, the high opening reliability, the wide application range, and the low production cost. The present invention can also provide the gas-adsorbing device in which, after the through-hole is made in the housing container using the protrusion, even if the protrusion is not separated from the housing container but the protrusion maintains the state in which the protrusion enters the housing container, the gas-adsorbing device can sufficiently exert an original function after opening. Additionally, the present invention can provide the gas-adsorbing device that is easily handled in the atmosphere, can easily be opened by applying the predetermined external force to the opening member, after opening, can cause the gas outside the housing container in the space where the gas-adsorbing device is disposed to adsorb to the gas-adsorbing material in the housing container at a sufficient gas adsorption rate, and can maintain a degree of vacuum of the closed space where the gas-adsorbing device is disposed over a long term.

### Brief Description of Drawings

Fig. 1 is an appearance perspective view illustrating an example of an unopened gas-adsorbing device according to a first embodiment of the present invention.
Fig. 2 is an appearance perspective view illustrating an example of the gas-adsorbing device according to the first embodiment of the present invention after opening.
Fig. 3 is an appearance perspective view illustrating an example of an unopened gas-adsorbing device according to a second embodiment of the present invention.
Fig. 4 is an appearance perspective view illustrating an example of the gas-adsorbing device according to the second embodiment of the present invention after opening.
Fig. 5 is an appearance perspective view illustrating an example of an unopened gas-adsorbing device according to a third embodiment of the present invention.
Fig. 6 is a plan view illustrating an example of a gas-adsorbing device according to a fourth embodiment of the present invention when viewed from a surface side on which a through-hole is made in a housing container by a protrusion of an opening member.
Fig. 7 is a plan view illustrating an example of a gas-adsorbing device according to a fifth embodiment of the present invention when viewed from the surface side on which the through-hole is made in the housing container by the protrusion of the opening member.
Fig. 8 is a plan view illustrating an example of a schematic configuration of a gas-adsorbing device according to a sixth embodiment of the present invention.
Fig. 9 is a sectional view taken on a line A-A in Fig. 8.
Fig. 10 is a sectional view illustrating an example of an unopened gas-adsorbing device according to a comparative example of a seventh embodiment of the present invention.
Fig. 11 is a sectional view illustrating an example of the gas-adsorbing device according to the comparative example of the seventh embodiment of the present invention after opening.
Fig. 12 is a sectional view illustrating an example of the unopened gas-adsorbing device according to the seventh embodiment of the present invention.
Fig. 13 is a sectional view illustrating an example of the gas-adsorbing device according to the seventh embodiment of the present invention after opening.
Fig. 14A is a side view illustrating an example of the protrusion used in the gas-adsorbing device according to the seventh embodiment of the present invention.
Fig. 14B is a front view illustrating an example of the protrusion used in the gas-adsorbing device according to the seventh embodiment of the present invention when viewed from a point side.
Fig. 15A is a side view illustrating an example of a protrusion used in a gas-adsorbing device according to an eighth embodiment of the present invention.
Fig. 15B is a front view illustrating an example of the protrusion used in the gas-adsorbing device according to the eighth embodiment of the present invention when viewed from a point side.
Fig. 16A is a side view illustrating an example of a protrusion used in a gas-adsorbing device according to a ninth embodiment of the present invention.
Fig. 16B is a front view illustrating an example of the protrusion used in the gas-adsorbing device according to the ninth embodiment of the present invention when viewed from the point side.
Fig. 17A is a side view illustrating an example of a protrusion used in a gas-adsorbing device according to a tenth embodiment of the present invention.
Fig. 17B is a front view illustrating an example of the protrusion used in the gas-adsorbing device according to the tenth embodiment of the present invention when viewed from the point side.
Fig. 18 is a vertical sectional view illustrating an example of a gas-adsorbing device according to a comparative example of an eleventh embodiment of the present invention.
Fig. 19 is a perspective view illustrating an example of an unopened gas-adsorbing device according to the eleventh embodiment of the present invention.
Fig. 20 is a perspective view illustrating an example of a state in an opening operation of the gas-adsorbing device according to the eleventh embodiment of the present invention.
Fig. 21 is a perspective view illustrating an example of an opening member used in the gas-adsorbing device according to the eleventh embodiment of the present invention.
Fig. 22 is a perspective view illustrating an example of the state in the opening operation of the opening member used in the gas-adsorbing device according to the eleventh embodiment of the present invention.
Fig. 23 is a perspective view illustrating an example of an opening member used in a gas-adsorbing device according to a twelfth embodiment of the present invention.
Fig. 24 is a side view illustrating an example of the gas-adsorbing device according to the twelfth embodiment of the present invention when viewed from an aperture of the gas-adsorbing device in a lengthwise direction.
Fig. 25 is a perspective view illustrating an example of an opening member used in a gas-adsorbing device according to a thirteenth embodiment of the present invention.
Fig. 26 is a perspective view illustrating an example of the state in the opening operation of the opening member used in the gas-adsorbing device according to the thirteenth embodiment of the present invention.
Fig. 27 is a perspective view illustrating an example of an opening member used in a gas-adsorbing device according to a fourteenth embodiment of the present invention.
Fig. 28 is a perspective view illustrating an example of the state in the opening operation of the opening member used in the gas-adsorbing device according to the fourteenth embodiment of the present invention.
Fig. 29 is a sectional view illustrating an example of a vacuum insulation panel according to a fifteenth embodiment of the present invention.
Fig. 30 is a sectional view of a conventional gas-adsorbing device.
Fig. 31A is a sectional view illustrating an opening member used in the conventional gas-adsorbing device.
Fig. 31B is a plan view illustrating the opening member used in the conventional gas-adsorbing device.

### Description of Embodiments

Hereinafter, embodiments of the present invention will be described with reference to the drawings. In all the following drawings, the identical or equivalent element is designated by the identical reference sign, and the overlapping description is omitted unless otherwise noted.

A first invention is a gas-adsorbing device including: a gas barrier housing container having a long and narrow, flat, cylindrical body in which a gas-adsorbing material is sealed under reduced pressure; and an opening member that is attached so as to go around the housing container about an axis in a lengthwise direction of the housing container, the opening member including a pressing unit that presses the housing container. In the configuration, the opening member is attached so as to go around the housing container about the axis in the lengthwise direction of the housing container, and the opening member is hardly displaced (turned away) even if an external force is provided in all directions of the housing container. Therefore, the organic connection is strong between the opening member and the housing container, and it is easy to stably open the housing container using the opening member. Specifically, the first invention can take the following forms of second to seventeenth inventions.

A second invention is a gas-adsorbing device including: a gas-adsorbing material; a gas barrier housing container having a long and narrow, flat, cylindrical body in which the gas-adsorbing material is sealed under reduced pressure; and an opening member that is attached so as to go around the housing container about an axis in a lengthwise direction of the housing container, the opening member including a protrusion that makes a through-hole in the housing container, wherein the opening member includes: a retention unit that grips an outer circumferential surface of the cylindrical body in a width direction of the housing container, the retention unit circumferentially surrounding the outer circumferential surface of the cylindrical body so as to cover at least a portion, on which the protrusion entering the housing container has a possibility to abut from an inside of the housing container, in a surface on an opposite side to a surface in which the through-hole is made; and a movable unit in which a fixed end is coupled to the retention unit, the protrusion being formed at a free end of the movable unit, and the movable unit is, before opening, opposed to the surface in which the through-hole is made at some interval while inclined at a predetermined angle, when the retention unit grips the housing container in the width direction, and the protrusion pierces through the surface in which the through-hole is made, when the movable unit is pushed by a predetermined force during opening in a direction in which the protrusion comes close to the surface in which the through-hole is made.

The opening member includes: a retention unit that grips an outer circumferential surface of the cylindrical body in a width direction of the housing container, the retention unit circumferentially surrounding the outer circumferential surface of the cylindrical body so as to cover at least a portion, on which the protrusion entering the housing container has a possibility to abut from an inside of the housing container, in a surface on an opposite side to a surface in which the through-hole is made; and a movable unit in which a fixed end is coupled to the retention unit, the protrusion being formed at a free end of the movable unit.

The movable unit is, before opening, opposed to the surface in which the through-hole is made at some interval while inclined at a predetermined angle, when the retention unit grips the housing container in the width direction, and the protrusion pierces through the surface in which the through-hole is made, when the movable unit is pushed by a predetermined force in a direction in which the protrusion comes close to the surface in which the through-hole is made.

As used herein, in the present invention, "the pressing unit" is implemented as the protrusion that makes the through-hole in the housing container and the movable unit in which the protrusion is formed.

There is no particular limitation to "the gas-adsorbing material", but the gas-adsorbing material has a function of adsorbing a mixed gas, such as moisture and air, which remains in or invades into a closed space such as the vacuum insulation panel. From the viewpoint of nitrogen adsorbing characteristic, preferably copper-ion-exchanged ZSM-5 zeolite is used as the gas-adsorbing material, and more preferably a material in which at least 60% copper site of the copper-ion-exchanged ZSM-5 zeolite is substituted for univalent copper site is used as the gas-adsorbing material.

"The gas barrier housing container" has a function of having a property (a gas barrier property) that does not pass the gas such as air and moisture and of not exposing the gas-adsorbing material to the atmosphere. There is no particular limitation to "a material for the housing container", but metals such as aluminum and copper and resins can be used as the housing container. Cylindrical, square, or substantially flat containers with the aperture can be used as "the shape of the housing container". There is no particular limitation to the shape of the housing container as long as the housing container can accommodate the gas-adsorbing material therein while the aperture can be closed by the encapsulant. The cylindrical housing container that is sealed by closing the aperture is preferable to "the shape of the housing container", and the housing container that is formed with a bottom by deep drawing is more preferable to "the shape of the housing container". Examples of the sectional shape of the cylinder include a circle, a square, and an ellipse. Preferably the substantially flat shape is used as the sectional shape of the cylinder.

For example, preferably a constriction unit in which inner surfaces are close to each other is provided in "the aperture of the housing container", and the constriction unit in the aperture is closed by the encapsulant such as a brazing material and sealing glass. There is no particular limitation to a method for closing the aperture as long as the method has high closing reliability.

"The encapsulant" is a material, which has the property that does not pass the gas such as the air and moisture, has a function of closing the aperture of the housing container such that the gas-adsorbing material in the housing container is not exposed to the atmosphere, and has a function of being deformed and broken to put the aperture into a non-sealed state when the external force is applied during the use of the gas-adsorbing device. For example, the glass, the brazing material, and the resin can be used as "the material for the encapsulant". Preferably the hard and brittle glass is used because the encapsulant is broken to open the gas-adsorbing device during the use of the gas-adsorbing device.

"The opening member" is one in which, for example, both end portions constituting leg portions are closely fixed to the outer surface of the housing container, the protrusion protruding toward the housing container side is provided in the surface that is opposed to the housing container in the central portion between both the end portions while separated from the housing container, and the central portion is deformed to make the through-hole in the housing container using the protrusion when the predetermined external force is applied to the central portion in the direction in which the central portion comes close to the housing container. Metals such as iron and aluminum and resins can be used as "the material for the opening member". Hardness of the protrusion is higher than that of the housing container in order to make the through-hole in the housing container. There is no particular limitation to the hardness as long as the protrusion is not broken. In other words, there is no particular limitation to the hardness and elasticity of the opening member as long as the protrusion can make the through-hole in the housing container. Preferably aluminum or copper is used because the flat plate is easily bent. There is no particular limitation to "the shape of the protrusion of the opening member". For example, a triangular shape and a shape in which a triangle and a quadrangle are combined may be used.

The opening member includes the retention unit, which grips the outer circumferential surface of the cylindrical body of the housing container in the width direction of the housing container and circumferentially surrounds the outer circumferential surface of the cylindrical body so as to cover at least a portion in the surface on the opposite side to the surface in which the through-hole is made. Therefore, the opening member is hardly turned away from the housing container, and the opening member and the housing container can easily be handled as an integral member.

In the opening member, the retention unit covers at least a portion, on which the protrusion entering the housing container has a possibility to abut from the inside of the housing container, in the surface on the opposite side to the surface in which the through-hole is made. Therefore, there is no risk that the protrusion of the opening member piercing through the housing container breaks other members.

The opening member includes: a retention unit that grips the housing container in the width direction, the retention unit circumferentially surrounding the outer circumferential surface of the housing container so as to cover at least a portion in a surface on an opposite side to a surface in which the through-hole is made; and the movable unit in which a fixed end is coupled to the retention unit, the protrusion being formed at a free end of the movable unit, and the protrusion pierces through the surface in which the through-hole is made, when the movable unit is pushed by a predetermined force in a direction in which the protrusion comes close to the surface in which the through-hole is made. Therefore, because the external force necessary for opening hardly varies, there is a low possibility of carelessly pushing the opening member to open the gas-adsorbing device.

A deformation (a displacement) of the housing container in a thickness direction (the pressing direction of the protrusion) by the pressing force of the protrusion can be suppressed to a lower level. Therefore, generation of a trouble such that, because the housing container is displaced in the thickness direction by the pressing force of the protrusion, the protrusion cannot make the through-hole in the housing container even if the movable unit performs the predetermined displacement can be prevented.

The opening member is constructed by bending an elastically-deformable and bending-workable flat plate in which one end constituting the free end has a pointed shape. Therefore, the opening member can be produced at low cost, and production cost of the gas-adsorbing device can be reduced using the opening member.

In the gas-adsorbing device of the present invention, the opening member and the housing container can easily be handled as the integral member, the variation of the external force necessary for opening is hardly generated. Therefore, there is the low possibility of carelessly pushing the opening member to open the gas-adsorbing device, the generation of the trouble in which the protrusion cannot make the through-hole in the housing container even if the movable unit performs the predetermined displacement can be decreased, there is no risk that the protrusion of the opening member piercing through the housing container breaks other members, and the production cost can be reduced.

A third invention is one in which particularly the opening member of the first or second invention is constructed by an elastically-deformable and bending-workable flat plate in which one end constituting the free end has a pointed shape, and the retention unit is formed so as to circumferentially surround the outer circumferential surface of the cylindrical body by bending the flat plate in midstream from the other end of the flat plate toward one end, and the protrusion is formed by inwardly bending a portion having the pointed shape at a base of the portion having the pointed shape.

In the present invention, the opening member is formed by bending the elastically-deformable and bending-workable flat plate in which one end constituting the free end has a pointed shape. Therefore, the opening member can be produced at low cost, and production cost of the gas-adsorbing device can be reduced using the opening member.

A fourth invention is one that particularly includes the plural protrusions of the first or third invention in a lengthwise direction of the housing container. Therefore, the plural through-holes can be made in the housing container. Compared with the case that the one through-hole is made in the housing container, an amount of gas entering the housing container can be increased, and therefore an adsorption rate can be enhanced.

Compared with the case in which protrusion is formed into a shape in which an area of the through-hole is enlarged in proportion with an intrusion depth of the protrusion to make the through-hole having the same area as the total area of the plural through-holes made by the plural protrusions, a displacement amount (a displacement angle) of the movable unit can be decreased to easily downsize the unopened gas-adsorbing device.

Even if the position of the opening member is deviated in the lengthwise direction of the housing container to an extent that the protrusion located at an end in the plural protrusions is turned away from the housing container, the plural remaining protrusions can make the through-holes in the housing container.

Additionally, because the opening member includes the plural protrusions, compared with the one protrusion, the applied external force disperses into plural protrusions, the through-hole is hardly made in the housing container by a wrong operation, and the handling of the gas-adsorbing device is facilitated.

A fifth invention is one in which, in the first to fourth inventions, the housing container is formed into a tapered shape such that an outer diameter of at least one end of the housing container is smaller than an inner diameter in a portion of the housing container where the retention unit grips the housing container in the width direction.

The housing container is formed into the above shape, which allows the opening member to be easily slidably inserted in the lengthwise direction of the housing container from the end formed into the tapered shape in the housing container. Therefore, the opening member that is slidably inserted in the lengthwise direction of the housing container from the end formed into the tapered shape in the housing container is easily fixed to a portion in which the width of the housing container and the width of the retention unit of the opening member are substantially equal to each other.

A sixth invention is one in which, in the first to fifth inventions, the inner diameter on one side in the lengthwise direction of the housing container is widened in the portion of the housing container where the retention unit grips the housing container in the width direction.

The retention unit of the opening member is formed into the above shape, and the opening member is slidably inserted in the lengthwise direction of the housing container while the side on which the inner diameter of the retention unit is widened is oriented toward the end portion on the insertion side of the housing container, which allows the opening member to be easily slidably inserted in the lengthwise direction of the housing container.

A seventh invention is one in which, particularly in the first to sixth inventions, the protrusion has a shape such that a gap in which gas around the housing container is adsorbed to the gas-adsorbing material can be formed between the protrusion and an edge of the through-hole, which is made in a manner such that the protrusion enters the housing container, a state in which the protrusion enters the housing container is maintained.

According to the above configuration, after the through-hole is made in the housing container using the protrusion, even if the protrusion is not separated from the housing container but the protrusion maintains the state in which the protrusion enters the housing container, the gas-adsorbing device can sufficiently exert an original function after opening.

An eighth invention is one in which, particularly in the seventh invention, an outer circumferential surface of the protrusion includes a spiral convex unit or a spiral groove.

For the protrusion including the spiral convex unit in the conical or columnar outer circumferential surface, a portion in which the outer diameter is smaller than that of the convex unit exists on a protrusion base side of each convex unit in a section in which the protrusion is cut by a plane including the center axis of the protrusion. Between the protrusion and the edge of the substantially circular through-hole made by the entry of the protrusion in the housing container, a larger gap is formed in a portion between the convex unit that passes through the through-hole while being closest to the through-hole and the convex unit that does not pass through the through-hole while being closest to the through-hole.

Accordingly, at least one of a height of the spiral convex unit, a distance between the convex unit that passes through the through-hole while being closest to the through-hole and the convex unit that does not pass through the through-hole while being closest to the through-hole, and the number of spiral convex units is set such that the gap becomes one in which the gas around the housing container can be adsorbed to the gas-adsorbing material. Therefore, after the through-hole is made in the housing container using the protrusion, even if the protrusion is not separated from the housing container but the protrusion maintains the state in which the protrusion enters the housing container, the gas-adsorbing device can sufficiently exert an original function using the gap after opening.

For the protrusion including the spiral groove in the conical or columnar outer circumferential surface, the outer diameter of the groove portion is smaller than that on the protrusion point side of the groove portion in a section in which the protrusion is cut by the plane including the center axis of the protrusion. Between the protrusion and the edge of the substantially circular through-hole made by the entry of the protrusion in the housing container, a larger gap is formed in a portion that is located in the position where the protrusion passes through the through-hole.

Accordingly, at least one of the depth of the spiral groove, the width of the spiral groove, and the number of spiral grooves is set such that the gap becomes one in which the gas around the housing container can be adsorbed to the gas-adsorbing material. Therefore, after the through-hole is made in the housing container using the protrusion, even if the protrusion is not separated from the housing container but the protrusion maintains the state in which the protrusion enters the housing container, the gas-adsorbing device can sufficiently exert an original function using the gap after opening.

A ninth invention is one in which, particularly in the seventh invention, the protrusion includes plural cutting edges that are radially arrayed.

In the case that the housing container is pierced through by the protrusion including the plural radially-arrayed cutting edges, the radial cut lines are formed in the housing container according to the number of radially-arrayed cutting edges, and the substantially polygonal through-hole is made according to the number of the cutting edges that are bent inward and radially arrayed. Therefore, the gap is easily formed between the protrusion and the edge of the substantially circular through-hole made by the entry of the protrusion in the housing container, particularly in the portion between the cutting edges circumferentially adjacent to each other.

Accordingly, at least one of dimensions (the length and the width) of the cutting edge and the number of cutting edges is set such that the gap becomes one in which the gas around the housing container can be adsorbed to the gas-adsorbing material. Therefore, after the through-hole is made in the housing container using the protrusion, even if the protrusion is not separated from the housing container but the protrusion maintains the state in which the protrusion enters the housing container, the gas-adsorbing device can sufficiently exert an original function using the gap after opening.

A tenth invention is one in which, particularly in the seventh invention, the protrusion has a claw shape with a constriction portion.

When the protrusion pierces through the housing container to a constriction portion of the claw shape, a larger gap is formed in a portion corresponding to the constriction portion between the protrusion and the edge of the substantially circular through-hole made by the entry of the protrusion in the housing container.

Accordingly, the claw shape is set such that the protrusion pierces through the housing container to the constriction portion of the claw shape, and such that the gap formed in the place corresponding to the constriction portion becomes one in which the gas around the housing container can be adsorbed to the gas-adsorbing material. Therefore, after the through-hole is made in the housing container using the protrusion, even if the protrusion is not separated from the housing container but the protrusion maintains the state in which the protrusion enters the housing container, the gas-adsorbing device can sufficiently exert an original function using the gap after opening.

An eleventh invention is one in which, particularly in the seventh invention, the protrusion has a Phillips-head-driver shape. Because of the same effect as ninth invention, after the through-hole is made in the housing container using the protrusion, even if the protrusion is not separated from the housing container but the protrusion maintains the state in which the protrusion enters the housing container, the gas-adsorbing device can sufficiently exert an original function after opening. Additionally, the cost is reduced because the protrusion can easily be formed into the Phillips-head-driver shape.

A twelfth invention is a gas-adsorbing device including: a gas-adsorption material; a gas barrier housing container in which the gas-adsorption material is accommodated, the housing container having a substantially flat cylindrical shape in which an aperture is provided at one end in a lengthwise direction; a gas barrier encapsulant that closes the aperture while at least part of the encapsulant is disposed in the aperture; and an opening member that includes at least one convex unit in one of surfaces opposed to each other and at least one concave unit in a portion opposed to the convex unit in the other surface, the opening member being attached to the housing container such that surfaces, which form the aperture while being opposed to each other, are gripped by the surfaces in which the convex unit and the concave unit are formed.

In the gas-adsorbing device of the twelfth invention, when a predetermined external force is applied to the opening member in a direction in which the surfaces, which form the aperture while being opposed to each other, are gripped, the convex unit and the concave unit come close to each other, the encapsulant is broken by a bending force of convex and concave shapes of the opening member, and a space outside the container and a space where the gas-adsorption material is accommodated are communicated with each other.

As used herein, in the present invention, "the pressing unit" is implemented as the convex unit and concave unit that grip two surfaces, which form the aperture of the housing container while being opposed to each other.

"The opening member" is one that is attached so as to grip the two surfaces, which form the aperture of the housing container while being opposed to each other, the predetermined external force is applied to break the encapsulant in the aperture by a bending force of the convex and concave shapes of the opening member, and the gas-adsorbing device is opened. It is necessary for "the material for the opening member" to have the hardness at which the portion that applies the force deforming the encapsulant through at least the aperture of the housing container to the aperture of the housing container can deform the encapsulant through the aperture of the housing container to an extent that the encapsulant is broken. There is no particular limitation to the material for the opening member as long as the material for the opening member has hardness in the portion in which the force deforming the encapsulant through at least the aperture of the housing container is applied to the aperture of the housing container. Preferably a resin is used as the material for the opening member from the viewpoint of easiness of forming the concave and convex shapes. There is no particular limitation to "the shapes of the convex and concave portions of the opening member". For example, at least one set of semicircular columns, triangular prisms, or quadrangular prisms, but the convex and concave portions may not necessarily have the same shape.

In the configuration, the gas-adsorbing material is accommodated in the gas barrier housing container (for example, the aluminum container) including the aperture at one end such that the gas-adsorbing material in the gas-adsorbing device is not exposed to air in the atmosphere until the gas-adsorbing device is used in the gas absorption. The aperture of the housing container is sealed by the gas barrier encapsulant (for example, the glass encapsulant) disposed in the aperture.

Until the gas-adsorbing device of the present invention is opened, the gas-adsorbing material in the gas-adsorbing device is not in contact with atmospheric air but covered with the gas barrier housing container and the gas barrier encapsulant, so that the gas-adsorbing performance of the gas-adsorbing material is maintained. For example, gas-adsorbing materials, such as copper-ion-exchanged ZSM-5 zeolite, which have a wide surface area exposed to air and sufficient gas adsorption rate and gas-adsorbing performance while special working such as pressing is not performed, can be used as the gas-adsorbing material accommodated in the housing container.

In the case that the gas-adsorbing device is used in the gas adsorption, a predetermined external force is applied to the opening member that is attached so as to grip the two surfaces, which form the aperture of the housing container while being opposed to each other, which allows the bending force of the convex and concave shapes of the opening member to break the encapsulant in the aperture to easily open the gas-adsorbing device.

The proper setting of the external force necessary for opening can prevent the gas-adsorbing device from being carelessly opened using the opening member.

Accordingly, the gas-adsorbing device of the present invention is easily handled in the atmosphere, and the gas-adsorbing device can easily be opened by applying the predetermined external force to the opening member. After opening, the gas outside the housing container in the space where the gas-adsorbing device is disposed can be adsorbed to the gas-adsorbing material in the housing container at the sufficient gas adsorption rate, and the degree of vacuum of the closed space where the gas-adsorbing device is disposed can be maintained over a long term.

A thirteenth invention is one in which the surface in which the convex unit of the opening member of the twelfth invention is formed is substantially similar to the surface in which the concave unit is formed, and the concave unit is larger than the convex unit.

When the opening member of the present invention is compressed by the external force to engage the convex unit and the concave unit with each other, the concave unit is larger than the convex unit, and the convex unit is accommodated in the concave unit. Therefore, the deformable gap is provided between the concave unit and the convex unit. Because the convex unit and the concave unit are similar to each other, the force is applied to the whole housing container sandwiched between the concave unit and the convex unit.

In the engagement state, the sealing portion of the gas-adsorbing device is easily deformed due to the substantially similar shape. Therefore, the deformation and breakage of the encapsulant are easily performed compared with the first invention. Accordingly, in the thirteenth invention, the opening operation is easily performed to facilitate the handling compared with the twelfth invention.

A fourteenth invention is one in which the convex unit and the concave unit of the opening member of the twelfth or thirteenth invention are continuously provided along the lengthwise direction of the container.

In the opening member of the present invention, the sectional shape of the opening member in the lengthwise direction of the housing container is always kept constant, the sealing portion is evenly deformed from the aperture toward the deep side of the housing container in the lengthwise direction when the predetermined external force is applied to the opening member, thereby evenly deforming or breaking the encapsulant.

The encapsulant is continuously and evenly broken in the lengthwise direction, which easily communicates the space outside the housing container with the space where the gas-adsorbing material is accommodated. Accordingly, in the fourteenth invention, the opening operation is easily performed to facilitate the handling compared with the twelfth invention.

A fifteenth invention is one in which the opening member of any one of the twelfth to fourteenth inventions includes: a push unit that is opposed to one of the surfaces, which form the aperture while being opposed to each other; a receiver unit that is opposed to the other surface; and a connection unit that connects one end of the push unit in a direction perpendicular to both a thickness direction of the aperture and the lengthwise direction of the container and one end of the receiver unit in the direction perpendicular to both the thickness direction of the aperture and the lengthwise direction of the container such that the opening member becomes a substantial U-shape when viewed in the lengthwise direction of the container.

In the opening member of the present invention, the opening member is formed into the substantial U-shape when viewed in the lengthwise direction of the housing container, the connection unit of the push unit and the receiver unit is supported in a cantilever manner, and the opening member can easily be compressed and engaged compared with the opening member of the twelfth invention in which the connection unit is supported at both the ends. Therefore, the encapsulant is easily deformed and broken. Accordingly, in the fifteenth invention, the opening operation is easily performed to facilitate the handling compared with the twelfth invention.

A sixteenth invention is one in which the opening member of any one of the twelfth to fourteenth inventions includes: a push unit that is opposed to one of the surfaces, which form the opening unit while being opposed to each other; a receiver unit that is opposed to the other surface; and a connection unit that connects both ends of the push unit in the direction perpendicular to both the thickness direction of the aperture and the lengthwise direction of the container and both ends of the receiver unit in the direction perpendicular to both the thickness direction of the aperture and the lengthwise direction of the container such that the opening member becomes a substantial O-shape when viewed in the lengthwise direction of the container, and the connection unit is made of a material that is easily bent compared with the push unit and the receiver unit.

In the opening member of the present invention, the connection unit is made of a material that is bent easier than the push unit and the receiver unit. Therefore, the compression and engagement can easily be performed to easily deform and break the encapsulant compared with the opening member of the twelfth invention, which is made of the material having the hardness to some extent in order to break the encapsulant. Accordingly, in the sixteenth invention, the opening operation is easily performed to facilitate the handling compared with the twelfth invention.

As to the material for the opening member of the present invention, although there is no particular limitation to the material, the push unit including the convex unit and the receiver unit including the concave unit can be made of resin having the hardness comparable to that of the twelfth invention, and the connection unit connecting the push unit and the receiver unit can be made of resin having the hardness lower than that of the push unit and the receiver unit.

A seventeenth invention is a vacuum insulation panel including: a core material; and the gas-adsorbing device of any one of the first to sixteenth inventions, wherein the core material and the gas-adsorbing device are covered with a gas barrier coat material, and a pressure of an inside of the coat material is reduced.

In the configuration, the gas-adsorbing device can sufficiently exert the original function. Therefore, the vacuum insulation panel can keep the inside of the gas-adsorbing device at high vacuum for long periods to obtain the high heat insulating performance.

Hereinafter, gas-adsorbing devices according to embodiments of the present invention will be described with reference to the drawings. However, the present invention is not limited to the embodiments.

The same configuration as the preceding embodiment is designated by the same reference sign, and the detailed description is omitted.

### (First embodiment)

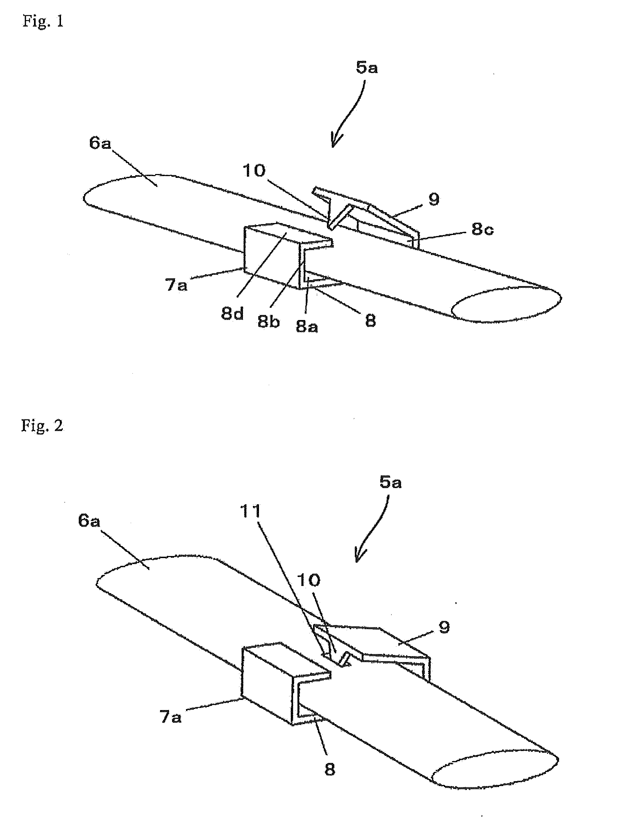

Fig. 1 is an appearance perspective view illustrating an example of an unopened gas-adsorbing device according to a first embodiment of the present invention, and Fig. 2 is an appearance perspective view illustrating an example of the gas-adsorbing device of the first embodiment after opening.

As illustrated in Figs. 1 and 2, basically a gas-adsorbing device 5a of the first embodiment includes: a gas barrier housing container 6a having a long and narrow, flat, cylindrical body in which a gas-adsorbing material (not illustrated) is sealed under reduced pressure; and an opening member 7a that is attached so as to go around the housing container 6a about an axis in a lengthwise direction of the housing container 6a, the opening member 7a including a pressing unit that presses the housing container 6a. The opening member 7a has a shape that grips both surfaces in both end portions in a crosswise direction (a width direction) of the housing container 6a. The flat surface of the housing container 6a is pressed by the opening member 7a that is attached so as to go around the housing container 6a, the housing container 6a is opened, and the gas around the housing container 6a can be adsorbed to the gas-adsorbing material. Specifically, the opening member 7a includes a protrusion 10 that presses the flat surface of the housing container 6a, and a through-hole 11 is made in the flat surface of the housing container 6a by the protrusion 10 of the opening member 7a disposed outside the housing container 6a, whereby the gas around the housing container 6a is adsorbed to the gas-adsorbing material through the through-hole 11.

The opening member 7a includes a retention unit 8 that grips an outer circumferential surface of the cylindrical body in a width direction of the housing container 6a, the retention unit 8 circumferentially surrounding the outer circumferential surface of the cylindrical body so as to cover at least a portion, on which the protrusion 10 entering the housing container 6a has a possibility to abut from an inside of the housing container 6a, in a flat surface on an opposite side to a surface in which the through-hole 11 is made; and a movable unit 9 in which a fixed end is coupled to the retention unit 8, the protrusion 10 being formed at a free end of the movable unit 9. Before opening, the movable unit 9 is opposed to the flat surface in which the through-hole 11 is made at some interval while inclined at a predetermined angle, when the retention unit 8 grips the housing container 6a in the width direction, and the protrusion 10 pierces through the flat surface in which the through-hole 11 is made, when the movable unit 9 is pushed by a predetermined force in a direction in which the protrusion 10 comes close to the flat surface in which the through-hole 11 is made.

Basically, the gas-adsorbing device 5a includes the housing container 6a and the opening member 7a that is attached so as to go around the housing container 6a about the axis in the lengthwise direction of the housing container 6a, the opening member 6a including a pressing unit that presses the flat surface of the housing container 6a. The opening member 7a grips both outer surfaces in both the end portions in the crosswise direction (the width direction) of the housing container 6a.

Specifically, the opening member 7a is constructed by an elastically-deformable and bending-workable flat plate in which one end constituting the free end has a pointed triangular shape. In the opening member 7a, the retention unit 8 that grips the outer circumferential surface of the cylindrical body in the width direction, the retention unit 8 circumferentially surrounds the outer circumferential surface of the cylindrical body so as to cover at least the portion, on which the protrusion 10 entering the housing container 6a has the possibility to abut from the inside of the housing container 6a, in the flat surface on the opposite side to the surface in which the through-hole 11 is made, and the retention unit 8 is formed so as to circumferentially surround the outer circumferential surface of the cylindrical body by bending the flat plate in midstream from the other end of the flat plate toward one end. In the opening member 7a, the triangular protrusion 10 is formed by inwardly bending a portion having the pointed shape at a base of the portion having the pointed shape (such that the pointed portion substantially perpendicularly pierces through the flat surface on the side on which the through-hole 11 is made).

The retention unit 8 of the opening member 7a includes a bottom unit 8a, two lateral units 8b and 8c, and an upper surface unit 8d. A dimension of the bottom unit 8a is kept constant in the lengthwise direction of the housing container 6a, and the bottom unit 8a constitutes a flat surface on the opposite side to the surface in which the through-hole 11 is made in the housing container 6a. The lateral units 8b and 8c are coupled to the bottom unit 8a, the lateral units 8b and 8c are coupled to the bottom unit 8a so as to grip the outer circumferential surface of the cylindrical body in the housing container 6a in the width direction of the housing container 6a, and the lateral units 8b and 8c constitute the planes substantially perpendicular to the bottom unit 8a. The upper surface unit 8d is coupled to the lateral unit 8b that is not coupled to the movable unit 9, and the upper surface unit 8d constitutes a plane parallel to the bottom unit 8a that covers the end portion in the width direction of the surface in which the through-hole 11 is made in the housing container 6a.

The movable unit 9 of the opening member 7a is coupled to an upper end of the lateral unit 8c that is not coupled to the upper surface unit 8d, and the movable unit 9 constitutes a plane, which is inclined onto the side opposed to the surface in which the through-hole 11 is made in the housing container 6a, at angles of about 30 degrees to about 60 degrees with respect to the lateral unit 8c.

The protrusion 10 of the opening member 7a is provided in a position in which, when the movable unit 9 is pressed by a predetermined force in the direction in which the movable unit 9 comes close to the flat surface in which the through-hole 11 is made, the protrusion 10 turns about the portion, in which the movable unit 9 is coupled to the retention unit 8, so as to pierce through the substantially central portion in the width direction in the flat surface in which the through-hole 11 is made.

The housing container 6a has a substantially elliptical cutting surface when being cut in the surface perpendicular to the lengthwise direction of the housing container 6a, the housing container 6a has a substantially square cutting surface when being cut in the surface perpendicular to the lengthwise direction of the housing container 6a in the retention unit 8, and an inner diameter in the thickness direction of the housing container 6a in the retention unit 8 is slightly larger than a thickness of the housing container 6a.

Therefore, in slidably inserting the opening member 7a in the lengthwise direction of the housing container 6a from the end of the housing container 6a, when the housing container 6a is slightly inclined such that the width direction of the housing container 6a comes close to a diagonal line of the retention unit 8, the opening member 7a is easily slidably inserted in the lengthwise direction of the housing container 6a from the end of the housing container 6a.

In fixing the opening member 7a to a predetermined position of the housing container 6a, the positional relationship between the opening member 7a and the housing container 6a is aligned such that the width direction of the housing container 6a is substantially parallel to the bottom unit 8a of the retention unit 8 while the housing container 6a comes close to the bottom unit 8a of the retention unit 8 when the position of the opening member 7a becomes the predetermined position in the lengthwise direction of the housing container 6a. Therefore, a force of the retention unit 8 to retain (fix) the housing container 6a increases. Accordingly, the opening member 7a is more hardly separated from the housing container 6a, and the opening member 7a and the housing container 6a can more easily be handled as the integral member.

In moving or detaching the opening member 7a fixed to the predetermined position from the housing container 6a, when the housing container 6a is slightly inclined such that the width direction of the housing container 6a comes close to the diagonal line of the retention unit 8, the force of the retention unit 8 to retain (fix) the housing container 6a is decreased. Therefore, the opening member 7a can easily be moved or detached from the housing container 6a.

The opening member 7a is configured such that the housing container 6a cannot be inserted and taken out through a gap between the protrusion 10 and the upper surface unit 8d of the retention unit 8 in the opening member 7a by the upper surface unit 8d of the retention unit 8 and the protrusion 10 formed by bending the free end of the movable unit 9.

A material in which at least 60% copper site of the copper-ion-exchanged ZSM-5 zeolite is substituted for univalent copper site is used as the gas-adsorbing material of the first embodiment.

The aluminum cylindrical housing container 6a is formed with a bottom by deep drawing. After the gas-adsorbing material is accommodated from the aperture, a constriction unit in which inner surfaces are close to each other is provided near the aperture, and the housing container 6a is sealed by closing the constriction unit in the aperture with a sealing glass.

The opening member 7a is formed by bending a steel flat plate in which one end constituting the free end is formed into the pointed triangular shape.

An operation of the gas-adsorbing device 5a of the first embodiment having the above configuration will be described below.

As illustrated in Fig. 2, in the case that the predetermined external force is applied to the movable unit 9, namely, in the case that the external force is applied in the direction in which the movable unit 9 comes close to the flat surface of the housing container 6a in Fig. 1, the protrusion 10 pierces through the flat surface of the housing container 6a, and the through-hole 11 is made in the flat surface of the housing container 6a. As a result, the inner space of the housing container 6a and the outside of the housing container 6a are communicated with each other by the through-hole 11, and the gas outside the housing container 6a is adsorbed to the gas-adsorbing material in the housing container 6a.

The opening member 7a includes the retention unit 8 that grips the outer circumferential surface of the cylindrical body of the housing container 6a in a width direction of the housing container 6a, the retention unit 8 circumferentially surrounding the outer circumferential surface of the cylindrical body so as to cover at least the portion in the flat surface on the opposite side to the surface in which the through-hole 11 is made. Therefore, the opening member 7a is hardly separated from the housing container 6a, and the opening member 7a and the housing container 6a can easily be handled as the integral member.

In the opening member 7a, the retention unit 8 covers at least the portion, on which the protrusion 10 entering the housing container 6a has the possibility to abut from the inside of the housing container 6a, in the flat surface on the opposite side to the surface in which the through-hole 11 is made. Therefore, there is no risk that the protrusion 10 of the opening member 7a, which pierces through the housing container 6a, breaks other members.

The opening member 7a includes: the retention unit 8 that grips the housing container 6a in the width direction, the retention unit 8 circumferentially surrounding the outer circumferential surface of the housing container 6a so as to cover at least the portion in the flat surface on the opposite side to the flat surface in which the through-hole 11 is made; and the movable unit 9 in which the fixed end is coupled to the retention unit 8, the protrusion 10 being formed at the free end of the movable unit 9. The movable unit 9 is configured such that the protrusion 10 pierces through the surface in which the through-hole 11 is made when the movable unit 9 is pressed by the predetermined force in the direction in which the movable unit 9 comes close to the flat surface on the side on which the through-hole 11 is made. Therefore, because the external force necessary for opening hardly varies, there is a low possibility of carelessly pushing the opening member 7a to open the gas-adsorbing device 5 (the housing container 6a).

The deformation (the displacement) of the housing container 6a in the thickness direction (the pressing direction of the protrusion 10) by the pressing force of the protrusion 10 can be suppressed to a lower level. Therefore, the generation of the trouble such that, because housing container 6a is deformed (displaced) in the thickness direction (the pressing direction of the protrusion 10) by the pressing force of the protrusion 10, the protrusion 10 cannot make the through-hole 11 in the housing container 6a even if the movable unit 9 performs the predetermined displacement can be suppressed.

The opening member 7a is constructed by bending the elastically-deformable and bending-workable flat plate in which one end constituting the free end has the pointed shape. Therefore, the opening member 7a can be produced at low cost, and the production cost of the gas-adsorbing device 5 can be reduced using the opening member 7a.

Accordingly, in the gas-adsorbing device 5a, the opening member 7a and the housing container 6a can easily be handled as the integral member. Therefore, because the external force necessary for the opening hardly varies, there is the low possibility of carelessly pushing the opening member 7a to open the gas-adsorbing device 5 (the housing container 6a). Additionally, the generation of the trouble such that the protrusion 10 cannot make the through-hole 11 in the housing container 6a even if the movable unit 9 performs the predetermined displacement can be decreased. Additionally, there is no risk that the protrusion 10 of the opening member 7a, which pierces through the housing container 6a, breaks other members, and the production cost can be reduced.

The gas-adsorbing material may have the function of adsorbing the mixed gas, such as the air and moisture, which remains in or invades into the closed space such as the vacuum insulation panel. Although there is no limitation to the gas-adsorbing material, preferably copper-ion-exchanged ZSM-5 zeolite is used as the gas-adsorbing material from the viewpoint of excellent nitrogen adsorbing property. More preferably the material in which at least 60% copper site of the copper-ion-exchanged ZSM-5 zeolite is substituted for univalent copper site is used as the gas-adsorbing material.

The housing container 6a may have the property (the gas barrier property) that does not pass the gas such as the air and moisture and cause the gas-adsorbing material not to be exposed to the atmosphere. Although there is no particular limitation to the material for the housing container 6a, metals such as aluminum and copper and resins can be used as the housing container 6a. The cylindrical, square, substantially flat container with the aperture may be used as the housing container 6a. There is no particular limitation to the shape of the housing container 6a as long as the housing container 6a can accommodate the gas-adsorbing material therein while the aperture can be closed by the encapsulant. The cylindrical housing container that is sealed by closing the aperture is preferable to the shape of the housing container 6a, and the housing container that is formed with the bottom by the deep drawing is more preferable to the shape of the housing container 6a. Examples of the sectional shape of the cylinder include the circle, the square, and the ellipse. Preferably the substantially flat shape is used as the sectional shape of the cylinder.

For example, preferably the constriction unit in which the inner surfaces are close to each other is provided in the aperture of the housing container 6a, and the constriction unit in the aperture is closed by the encapsulant such as the brazing material and the sealing glass. There is no particular limitation to a method for closing the aperture as long as the method has high sealing reliability.

The encapsulant is a material, which has the property that does not pass the gas such as the air and moisture, has the function of closing the aperture of the housing container 6a such that the gas-adsorbing material in the housing container 6a is not exposed to the atmosphere, and has the function of being deformed and broken to put the aperture into the non-sealed state when the external force is applied. For example, the glass, the brazing material, and the resin can be used as "the material for the encapsulant". Preferably the hard and brittle glass is used because the encapsulant is broken to open the gas-adsorbing device during the use of the gas-adsorbing device.

The opening member 7a may be one in which, for example, both end portions constituting leg portions are closely fixed to the outer surface of the housing container 6a, the protrusion 10 protruding toward the side of the housing container 6a is provided in the surface that is opposed to the housing container 6a in the central portion between both the end portions while separated from the housing container 6a, and the central portion is deformed to make the through-hole 11 in the housing container 6a using the protrusion 10 when the predetermined external force is applied to the central portion in the direction in which the central portion comes close to the housing container 6a.

Metals such as iron and aluminum and resins can be used as the material for the opening member 7a. The hardness of the protrusion 10 is higher than that of the housing container 6a in order to make the through-hole 11 in the housing container 6a. There is no particular limitation to the hardness as long as the protrusion 10 is not broken. In other words, there is no particular limitation to the hardness and elasticity of the opening member 7a as long as the protrusion 10 can make the through-hole 11 in the housing container 6a. Preferably aluminum or copper is used because the flat plate is easily bent to be processed and configured. There is no particular limitation to the shape of the protrusion 10. For example, a triangular shape and a shape in which a triangle and a quadrangle are combined may be used. Various modifications can also be made in the following embodiments.

### (Second embodiment)

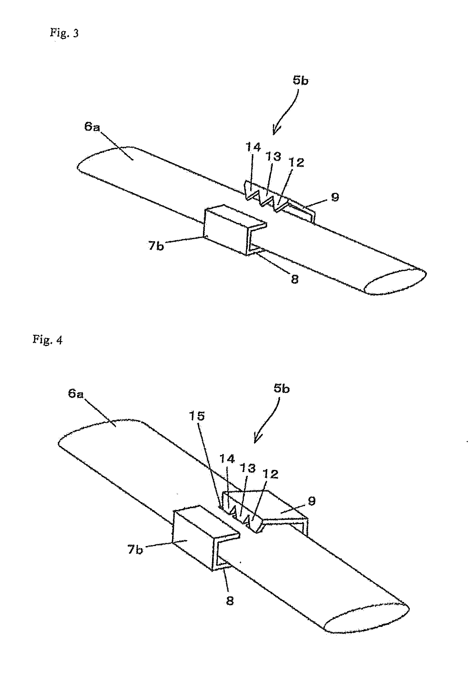

Fig. 3 is an appearance perspective view illustrating an example of an unopened gas-adsorbing device according to a second embodiment of the present invention, and Fig. 4 is an appearance perspective view illustrating an example of the gas-adsorbing device of the second embodiment after opening.

As illustrated in Fig. 3, a gas-adsorbing device 5b of the second embodiment includes a first protrusion 12, a second protrusion 13, a third protrusion 14 in the lengthwise direction of the housing container 6a instead of the protrusion 10 of the gas-adsorbing device 5a of the first embodiment. As illustrated in Fig. 4, in the case that the predetermined external force is applied to the movable unit 9, namely, in the case that the external force is applied in the direction in which the movable unit 9 comes close to the flat surface of the housing container 6a in Fig. 3, the first protrusion 12, the second protrusion 13, and the third protrusion 14 pierce through the flat surface of the housing container 6a. That is, the gas-adsorbing device 5b of the second embodiment differs from the gas-adsorbing device 5a of the first embodiment only in that a triple through-hole 15 different from the through-hole 11 is made. However, because the gas-adsorbing device 5b is identical to the gas-adsorbing device 5a in other configurations except the triple through-hole 15, the same effect is obtained.

In the second embodiment, the triple through-hole 15 (three through-holes) can be made in the housing container 6a, and the amount of gas entering the housing container 6a increases to increase the adsorption rate compared with the single through-hole.

The first protrusion 12, the second protrusion 13, and the third protrusion 14 are formed into the triangular shape such that an area of the through-hole is enlarged in parallel with the invasion depth of the protrusion. Therefore, the displacement amount (the displacement angle) of the movable unit 9 can be decreased to downsize the unopened gas-adsorbing device 5b compared with the case that the through-hole having the same area as the total area of the triple through-hole 15 made by the first protrusion 12, the second protrusion 13, and the third protrusion 14 is made by the one through-hole.

Even if the position of the opening member 7b is deviated in the lengthwise direction of the housing container 6a to an extent that the first protrusion 12 or the third protrusion 14 is turned away from the housing container 6a, the remaining protrusions can make the through-holes in the housing container 6a.

Additionally, because the opening member 7b includes the first protrusion 12, the second protrusion 13, and the third protrusion 14, compared with the one protrusion, the applied external force disperses into plural protrusions, the through-hole is hardly made in the housing container 6 by a wrong operation, and the handling of the gas-adsorbing device is facilitated.

### (Third embodiment)

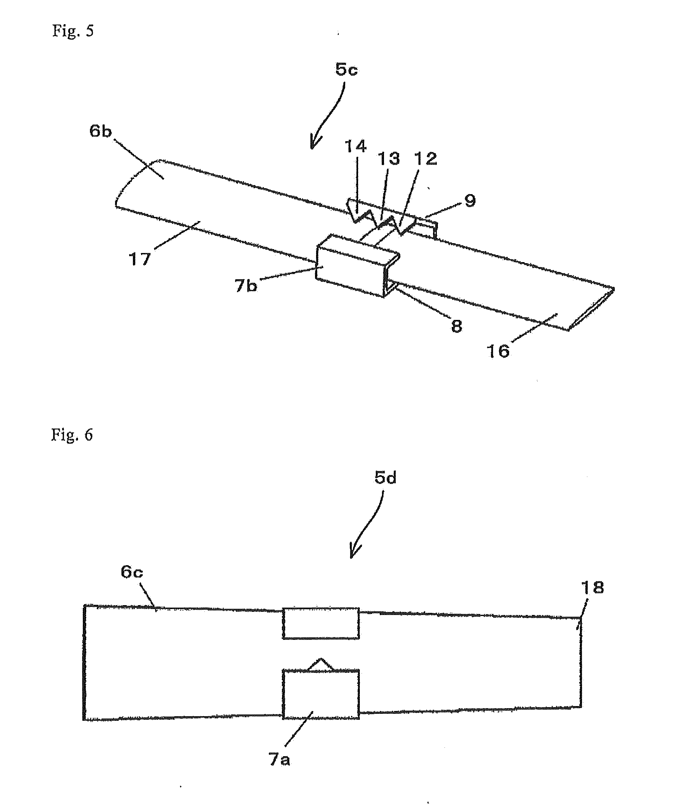

Fig. 5 is an appearance perspective view illustrating an example of an unopened gas-adsorbing device according to a third embodiment of the present invention.

As illustrated in Fig. 5, a gas-adsorbing device 5c of the third embodiment differs from the gas-adsorbing device 5b of the second embodiment only in that a housing container 6b having an uneven thickness is used. The housing container 6b includes an extremely flat housing-container thin unit 16 and a flat housing-container thick unit 17 in which the thickness is greater than that of the housing-container thin unit 16. Like the second embodiment, in the case that the predetermined external force is applied to the movable unit 9, namely, in the case that the external force is applied in the direction in which the movable unit 9 comes close to the flat surface of the housing container 6 in Fig. 5, the first protrusion 12, the second protrusion 13, and the third protrusion 14 pierce through the flat surface of the housing container 6b to make the three through-holes 11.

However, as illustrated in Fig. 5, in the gas-adsorbing device 5c of the third embodiment, compared with the gas-adsorbing device 5b of the second embodiment, the thickness of the housing container 6b is uneven along the lengthwise direction of the housing container 6b, and the shape of the through-hole 11 such as the size of the through-hole 11 changes depending on the position where the opening member 7b is placed on the housing container 6b. Accordingly, as illustrated in Fig. 5, the opening member 7b includes the first protrusion 12, the second protrusion 13, and the third protrusion 14, and the opening member 7b has the high probability that one of the first protrusion 12, the second protrusion 13, and the third protrusion 14 pierces through the thick housing-container thick unit 17 compared with the case of only one of the central second protrusion 13. Because the housing-container thick unit 17 is thick, the protrusion pierces deeply through the housing-container thick unit 17 to make the large through-hole 11.

### (Fourth embodiment)

Fig. 6 is a plan view illustrating an example of a gas-adsorbing device according to a fourth embodiment of the present invention when viewed from a surface side on which a through-hole is made in a housing container by a protrusion of an opening member.

As illustrated in Fig. 6, a gas-adsorbing device 5d of the fourth embodiment differs from the gas-adsorbing device 5a of the first embodiment only in that a housing container 6c having a tapered shape is used. The housing container 6c is formed into the tapered shape such that the outer diameter at one end of the housing container 6c is smaller than the inner diameter of the portion in which the housing container 6c in the retention unit 8 is gripped in the width direction. Other configuration of the gas-adsorbing device 5d are similar to those of the first embodiment, and the same effect as the first embodiment is obtained.

The use of the housing container 6c having the tapered shape can easily slidably insert the opening member 7a in the lengthwise direction of the housing container 6c from the end of the tapered shape of the housing container 6c. The opening member 7a that is slidably inserted in the lengthwise direction of the housing container 6c from a tapered end 18 of the tapered shape of the housing container 6c is easily fixed to the portion in which the width of the housing container 6c is substantially equal to the width of the retention unit 8 of the opening member 7a.

In the fourth embodiment, when the opening member 7a is attached so as to slide in the lengthwise direction from the tapered end 18, the opening member 7a is stopped in the portion in which the width of the housing container 6c is substantially equal to the width of inner diameter of the retention unit 8. When the width of the housing container 6c and the width of inner diameter of the retention unit 8 are properly set and accurately produced, the opening member 7a can be fixed to a specific position of the housing container 6c, and the protrusion 10 can make the through-hole 11 in the specific position of the housing container 6c.

### (Fifth embodiment)

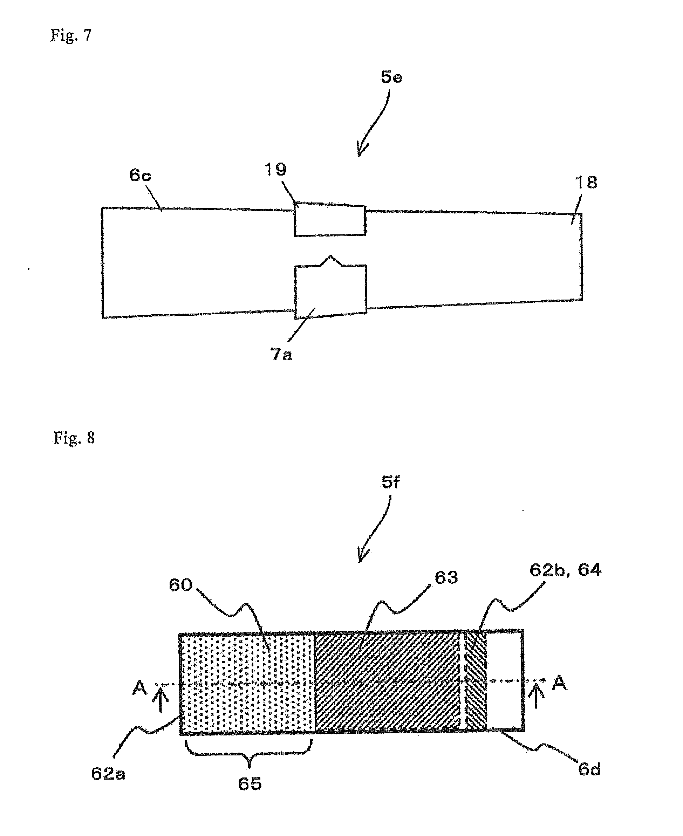

Fig. 7 is a plan view illustrating an example of a gas-adsorbing device according to a fifth embodiment of the present invention when viewed from the surface side on which the through-hole is made in the housing container by the protrusion of the opening member.

As illustrated in Fig. 7, the housing container 6c similar to that of the fourth embodiment is used in a gas-adsorbing device 5e of the fifth embodiment. However, the housing container 6c of gas-adsorbing device 5e differs from the housing container 6c of the fourth embodiment in that the portion in which the housing container 6c in the retention unit 8 is gripped in the width direction is configured such that the inner diameter on one side in the lengthwise direction of the housing container 6c is widened. Other configuration of the gas-adsorbing device 5e are similar to those of the fourth embodiment, and the same effect as the fourth embodiment is obtained.

The retention unit 8 of the opening member 7a is formed into the above shape. Therefore, a wide unit 19 in which the inner diameter of the retention unit 8 is widened is oriented toward the end (the tapered end 18) on the insertion side of the housing container 6c, and the opening member 7a is slidably inserted in the lengthwise direction of the housing container 6c, whereby the opening member 7a is easily slidably inserted in the lengthwise direction of the housing container 6c.

In the fifth embodiment, the wide unit 19 in which the inner diameter of the retention unit 8 is widened is oriented toward the end (the tapered end 18) on the insertion side of the housing container 6c, and the opening member 7a is slidably inserted in the lengthwise direction from the tapered end 18, whereby the opening member 7a can smoothly slidably be inserted in the housing container 6c. Accordingly, when the width of the housing container 6c and the width of inner diameter of the retention unit 8 is properly set and accurately produced, the opening member 7a can be fixed to the specific position of the housing container 6c, and the protrusion 10 can make the through-hole 11 in the specific position of the housing container 6c.

### (Sixth embodiment)

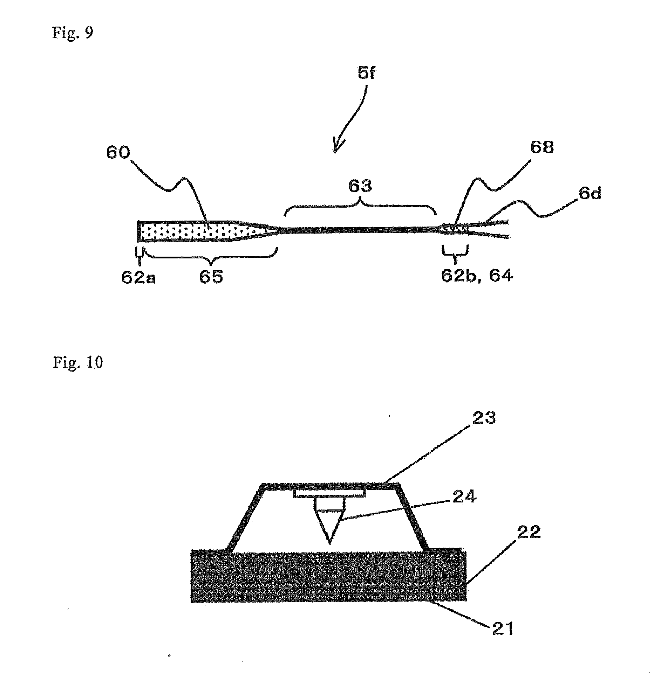

Fig. 8 is a plan view illustrating an example of a schematic configuration of a gas-adsorbing device according to a sixth embodiment of the present invention. Fig. 9 is a sectional view taken on a line A-A in Fig. 8.

As illustrated in Figs. 8 and 9, a gas-adsorbing device 5f of the sixth embodiment includes a gas-adsorbing material 60 and a long and thin, flat aluminum housing container 6d. The gas-adsorbing material 60 is made of copper-ion-exchanged ZSM-5 zeolite, and adsorbs nitrogen. In the housing container 6d, both sides of a housing unit 65 in which the gas-adsorbing material 60 is accommodated under reduced pressure is sealed.

A sealing unit 62a of a sealing unit 62 located at both ends of the housing unit 65 is a bottom that is obtained by the deep drawing of the housing container 6d into the cylindrical shape with a bottom. In a sealing unit 62b, a constriction unit 64 in which the inner surfaces opposed to each other in the housing container 6d are brought close to each other is sealed by sealing glass.

The housing container 6d includes a contact unit 63 in which the inner surfaces opposed to each other in the housing container 6d are in contact with each other between the housing unit 65 and the sealing unit 62b in which the constriction unit 64 is sealed by the sealing glass.

As illustrated in Fig. 9, in the housing container 6d of the gas-adsorbing device 5f, the two flat surfaces opposed to each other are recessed. Specifically, the recess is formed by the contact unit 63 constituting the bottom, the sealing unit 62b, and the housing unit 65. The sealing unit 62b and the housing unit 65 form edges that are obliquely raised along the thickness direction of the housing container 6d from the two flat surfaces (bottoms) of the contact unit 63. As illustrated in Fig. 9, the flat surfaces opposed to each other are recessed in the housing container 6d. Alternatively, one of the flat surfaces opposed to each other may be recessed in the housing container 6d.

The gas-adsorbing device 5f is configured such that the contact unit 63 is swelled when the inner space of the housing container 6d is communicated with the outside of the housing container 6d (when the gas-adsorbing device 5f is opened).

The gas-adsorbing device 5f is prepared by the following producing method. A method for producing the gas-adsorbing device 5f includes: a process of accommodating the gas-adsorbing material 60 in the housing container 6d; a process of forming the constriction unit 64 while the contact unit 63 is formed by the external force; a process of disposing the sealing glass in the inner surface (the constriction unit 64) of the housing container 6d that constitutes the other sealing unit 62b; and a process of putting the gas-adsorbing device 5f in a vacuum heating furnace to perform a heat treatment. Specifically, the process of performing the heat treatment includes a process of activating the gas-adsorbing material 60; a process of melting the sealing glass under reduced pressure; a process of solidifying the sealing glass while the heating furnace is gradually cooled; and a process of annealing the housing container.

Preferably the producing method includes a process of adjusting a degree of flatness of the housing container 6d and the thickness of the housing container 6d during the deep drawing such that the contact unit 63 is formed between the housing unit 65 and the sealing unit 62b on the side of the constriction unit 64 by a difference in atmospheric pressure between the inside and outside of the housing container 6d.

In the producing method, a volume of the housing container 6d between the constriction unit 64 and the sealing unit 62a on the side that is formed by the deep drawing before the constriction unit 64 is sealed is sufficiently enlarged with respect to an amount (a volume) of gas-adsorbing material 60 accommodated in the housing container 6d, the gas-adsorbing device 5f is put in the vacuum heating furnace, the sealing glass is solidified, the outer pressure of the housing container 6d is returned to the atmospheric pressure to complete the gas-adsorbing device 5f. Until the gas-adsorbing device 5f is completed, the gas-adsorbing device 5f is prepared with the housing container 6d vertically disposed such that the lengthwise direction of the housing container 6d is set to the vertical direction and such that the sealing unit 62b on the side of the constriction unit 64 is located above the sealing unit 62a on the side formed by the deep drawing.

As described above, the gas-adsorbing device 5f includes: the gas-adsorbing material 60 made of copper-ion-exchanged ZSM-5 zeolite to adsorb the nitrogen; the long and thin, flat, cylindrical, metallic (aluminum) housing container 6d in which the both sides of the housing unit 65 in which the gas-adsorbing material 60 is accommodated under reduced pressure are sealed; and the contact unit 63 in which the inner surfaces opposed to each other are in close contact with each other in the housing container 6d between the housing unit 65 and the other sealing unit 62b on the side on which the constriction unit 64 of the housing container 6d is sealed by the sealing glass.

According to the configuration, when the retention unit 8 of the opening members 7a and 7b in Figs. 1 to 7 surrounds the outer circumferential surface of the contact unit 63 of the housing container 6d, each of the opening members 7a and 7b can be fixed to the position of the contact unit 63 of the housing container 6d. The sealing unit 62b and housing unit 65 that are coupled to the contact unit 63 is larger than the contact unit 63 in the thickness, so that the sealing unit 62b and the housing unit 65 can prevent the displacements of the opening members 7a and 7b. Accordingly, the opening members 7a and 7b are hardly turned away from the housing container 6d, and the organic connection between each of the opening members 7a and 7b and the housing container 6d is strengthened, so that the opening members 7a and 7b can more stably open the housing container 6d.

### (Seventh embodiment)

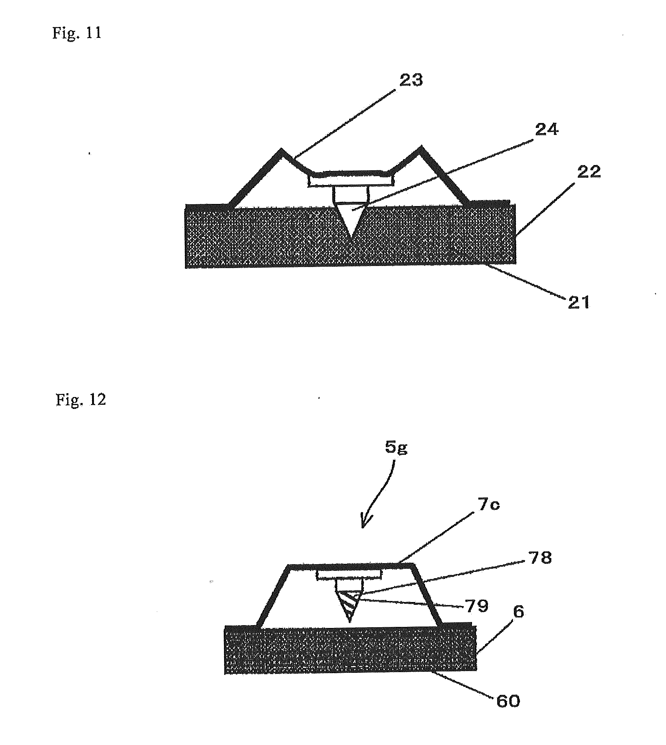

A comparative example of a seventh embodiment of the present invention will first be described. Fig. 10 is a sectional view illustrating an unopened gas-adsorbing device according to the comparative example, and Fig. 11 is a sectional view illustrating the gas-adsorbing device of the comparative example after opening.

As illustrated in Figs. 10 and 11, the gas-adsorbing device of the comparative example includes a gas-adsorbing material 21, a housing container 22, and an opening member 23. The housing container 22 is made of a gas barrier material and the gas-adsorbing material 21 is accommodated in the housing container 22 under reduced pressure. A conical protrusion 24 is provided in the opening member 23, both end portions constituting leg portions are closely fixed to the outer surface of the housing container 22, the protrusion 24 protruding toward the side of the housing container 22 is provided in the surface that is opposed to the housing container 22 in the central portion between both the end portions while separated from the housing container 22, and the central portion is deformed to make the through-hole in the housing container 22 using the protrusion 24 when the predetermined external force is applied to the central portion in the direction in which the central portion comes close to the housing container 22.

An operation of the gas-adsorbing device having the above configuration will be described below. When the predetermined external force is applied to the central portion of the opening member 23 in the direction in which the central portion comes close to the housing container 22, the opening member 23 is deformed, the protrusion 24 pierces through the housing container 22 to make the through-hole in the portion in which the protrusion 24 pierces through the housing container 22, and the gas around the housing container 22 is adsorbed to the gas-adsorbing material 21 through the through-hole.

However, in the gas-adsorbing device of the comparative example, because the conical protrusion 24 is pressed in the direction substantially perpendicular to the surface of the housing container 22, after the protrusion 24 makes the through-hole in the housing container 22, the protrusion 24 is not separated from the housing container 22. In the case that the protrusion 24 maintains the state in which the protrusion 24 enters the housing container 22, the sufficient gap in which the gas around the housing container 22 is adsorbed to the gas-adsorbing material 21 is not formed between the protrusion 24 and the edge of the through-hole made by the entry of the protrusion 24 in the housing container 22, but the gas-adsorbing device can insufficiently exert the original function after opening.

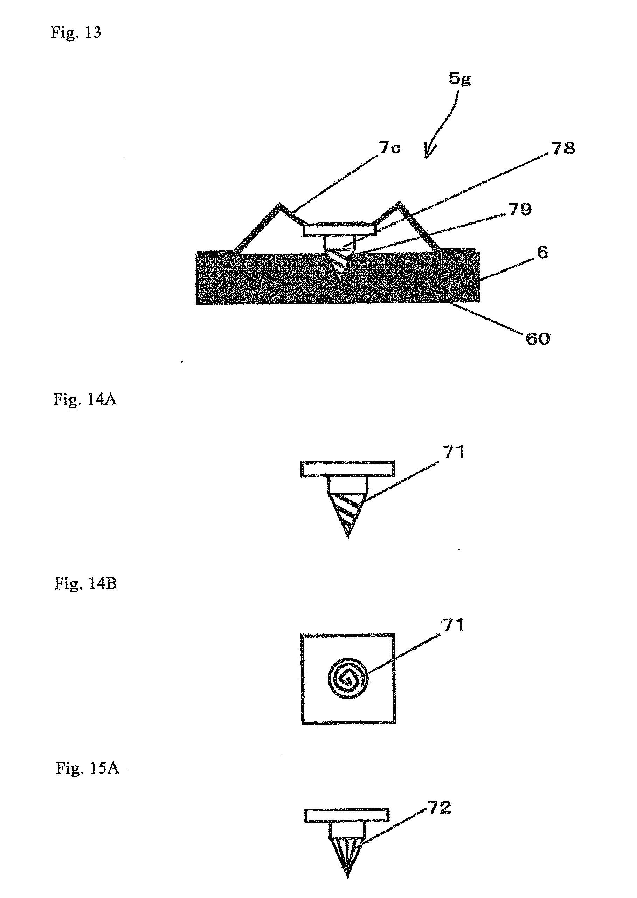

The seventh embodiment of the present invention will be described below. Fig. 12 is a sectional view illustrating the unopened gas-adsorbing device according to the seventh embodiment of the present invention, and Fig. 13 is a sectional view illustrating an example of the gas-adsorbing device of the seventh embodiment after opening. Fig. 14A is a side view illustrating the protrusion used in the gas-adsorbing device according to the seventh embodiment of the present invention, and Fig. 14B is a front view illustrating an example of the protrusion used in the gas-adsorbing device of the seventh embodiment when viewed from the point side.

As illustrated in Figs. 12 to 14, a gas-adsorbing device 5g of the seventh embodiment includes the gas-adsorbing material 60, a housing container 6, and an opening member 7c. The housing container 6 is made of the gas barrier material and the gas-adsorbing material 60 is accommodated in the housing container 6 under reduced pressure. A substantially conical protrusion 78 is provided in the opening member 7c, both end portions constituting leg portions are closely fixed to the outer surface of the housing container 6, the protrusion 78 protruding toward the side of the housing container 6 is provided in the surface that is opposed to the housing container 6 in the central portion between both the end portions while separated from the housing container 6, and the central portion is deformed to make the through-hole in the housing container 6 using the protrusion 78 when the predetermined external force is applied to the central portion in the direction in which the central portion comes close to the housing container 6. Instead of closely fixing both the end portions of the opening member 7c to the outer surface of the housing container 6, the opening members 7a and 7b may be provided so as to surround the outer circumference of the housing container 6 in Figs. 1 to 7. The same holds true for the following eighth to tenth embodiments.

The gas-adsorbing device 5g is configured such that the gas around the housing container 6 can be adsorbed to the gas-adsorbing material 60 through the through-hole by making the through-hole from the outside in the housing container 6 in which the gas-adsorbing material 60 is sealed under reduced pressure using the protrusion 78. The protrusion 78 has a shape 79. In the shape 79, even if the protrusion 78 maintains the state in which the protrusion 78 enters the housing container 6, the gap in which the gas around the housing container 6 can be adsorbed to the gas-adsorbing material 60 is formed between the protrusion 78 and the edge of the through-hole made by the entry of the protrusion 78 in the housing container 6.

In the seventh embodiment, copper-ion-exchanged ZSM-5 zeolite is used as the gas-adsorbing material 60, the housing container 6 is made of aluminum, and the encapsulant used to seal the housing container 6 is made of glass. The opening member 7c is made of hard resin, and a spiral groove 71 is formed in the outer circumferential surface of the protrusion 78.

An operation of the gas-adsorbing device 5g having the above configuration will be described below.

When the predetermined external force is applied to the central portion of the opening member 7c in the direction in which the central portion comes close to the housing container 6, the opening member 7c is deformed, the protrusion 78 pierces through the housing container 6 to make the through-hole in the portion in which the protrusion 78 pierces through the housing container 6, and the gas around the housing container 6 is adsorbed to the gas-adsorbing material 60 through the through-hole.

As described above, in the seventh embodiment, the gas-adsorbing device 5g is configured such that the gas around the aluminum housing container 6 can be adsorbed to the gas-adsorbing material 60 made of copper-ion-exchanged ZSM-5 zeolite through the through-hole by making the through-hole from the outside in the housing container 6 in which the gas-adsorbing material 60 is sealed under reduced pressure using the protrusion 78.

In the seventh embodiment, the protrusion 78 has a shape 79. In the shape 79, even if the protrusion 78 maintains the state in which the protrusion 78 enters the housing container 6, the gap in which the gas around the housing container 6 can be adsorbed to the gas-adsorbing material 60 is formed between the protrusion 78 and the edge of the through-hole made by the entry of the protrusion 78 in the housing container 6.

In the configuration, the protrusion 78 includes the shape 79 in which, even if the protrusion 78 maintains the state in which the protrusion 78 enters the housing container 6, the gap in which the gas around the housing container 6 can be adsorbed to the gas-adsorbing material 60 is formed between the protrusion 78 and the edge of the through-hole made by the entry of the protrusion 78 in the housing container 6. Therefore, even if the protrusion 78 is not separated from the housing container 6 but the protrusion 78 maintains the state in which the protrusion 78 enters the housing container 6 after the protrusion 78 makes the through-hole in the housing container 6, the gas-adsorbing device can sufficiently exert the original function using the gap after opening.

Like the seventh embodiment, for the protrusion 78 including the spiral groove 71 in the conical outer circumferential surface, the outer diameter of the spiral groove 71 is smaller than the point side of the protrusion of the spiral groove 71 in the section in which the protrusion 78 is cut by the plane including the center axis of the protrusion 78. The larger gap is formed in the spiral groove 71 located in the position where the spiral groove 71 passes through the through-hole between the protrusion 78 and the edge of the substantially circular through-hole made by the entry of the protrusion 78 in the housing container 6.

Accordingly, at least one of the depth of the spiral groove 71, the width of the spiral groove 71, and the number of spiral grooves 71 is set such that the gap becomes one in which the gas around the housing container can be adsorbed to the gas-adsorbing material. Therefore, after the through-hole is made in the housing container 6 using the protrusion 78, even if the protrusion 78 is not separated from the housing container 6 but the protrusion 78 maintains the state in which the protrusion 78 enters the housing container 6, the gas-adsorbing device can sufficiently exert the original function using the gap after opening.

For the protrusion including the spiral convex unit in the conical or columnar outer circumferential surface, the portion in which the outer diameter is smaller than that of the convex unit exists on the protrusion base side of each convex unit in the section in which the protrusion 78 is cut by the plane including the center axis of the protrusion 78. Between the protrusion 78 and the edge of the substantially circular through-hole made by the entry of the protrusion 78 in the housing container 6, the larger gap is formed in the portion between the convex unit that passes through the through-hole while being closest to the through-hole and the convex unit that does not pass through the through-hole while being closest to the through-hole.

Accordingly, at least one of the height of the spiral convex unit, the distance between the convex unit that passes through the through-hole while being closest to the through-hole and the convex unit that does not pass through the through-hole while being closest to the through-hole, and the number of spiral convex units is set such that the gap becomes one in which the gas around the housing container 6 can be adsorbed to the gas-adsorbing material 60. Therefore, after the through-hole is made in the housing container 6 using the protrusion 78, even if the protrusion 78 is not separated from the housing container 6 but the protrusion 78 maintains the state in which the protrusion 78 enters the housing container 6, the gas-adsorbing device can sufficiently exert the original function using the gap after opening.

### (Eighth embodiment)

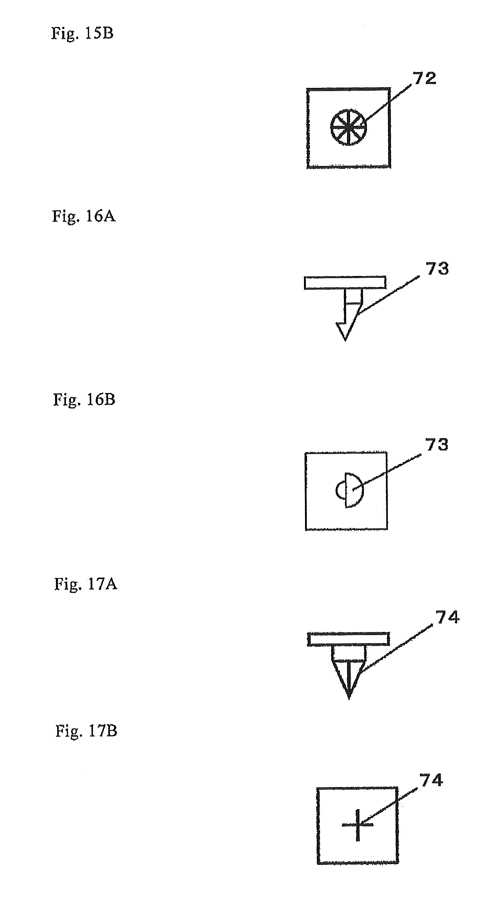

Fig. 15A is a side view illustrating a protrusion used in a gas-adsorbing device according to an eighth embodiment of the present invention, and Fig. 15B is a front view illustrating an example of the protrusion used in the gas-adsorbing device of the eighth embodiment when viewed from the point side.

In the eighth embodiment, the shape 79 of the protrusion 78 in the gas-adsorbing device 5g of the seventh embodiment is changed, and protrusion 78 includes eight cutting edges 72 that are radially arrayed. The eighth embodiment is identical to the seventh embodiment except the shape of 79 of the protrusion 78.

In the case that the housing container 6 is pierced through by the protrusion 78 including the plural (eight) radially-arrayed cutting edges, eight radial cut lines are formed in the housing container 6 according to the plural (eight) radially-arrayed cutting edges, and the substantially polygonal (substantially octagonal) through-hole is made according to the number of the cutting edges 72 that are bent inward and radially arrayed. Therefore, the gap is easily formed between the protrusion 78 and the edge of the substantially circular through-hole made by the entry of the protrusion 78 in the housing container 6, particularly in the portion between the cutting edges circumferentially adjacent to each other.

Accordingly, at least one of dimensions (the length and the width) of the cutting edge 72 and the number of cutting edges 72 is set such that the gap becomes one in which the gas around the housing container 6 can be adsorbed to the gas-adsorbing material 60. Therefore, after the through-hole is made in the housing container 6 using the protrusion 78, even if the protrusion 78 is not separated from the housing container 6 but the protrusion 78 maintains the state in which the protrusion 78 enters the housing container 6, the gas-adsorbing device can sufficiently exert the original function using the gap after opening.

### (Ninth embodiment)

Fig. 16A is a side view illustrating a protrusion used in a gas-adsorbing device according to a ninth embodiment of the present invention, and Fig. 16B is a front view illustrating the protrusion used in the gas-adsorbing device of the ninth embodiment when viewed from the point side.

In the ninth embodiment, the shape 79 of the protrusion 78 in the gas-adsorbing device 5g of the seventh embodiment is changed, and protrusion 78 is formed into a claw shape 73. The ninth embodiment is identical to the seventh embodiment except the shape of 79 of the protrusion 78.

In the ninth embodiment, the protrusion 78 is formed into the claw shape 73. In the claw shape 73, the cone is cut off in midstream such that a transverse surface has the circular shape between a front end and midstream toward the base, and such that the transverse surface has the semicircular shape from the midstream. The protrusion 78 partially has a constriction portion. When the protrusion 78 pierces through the housing container 6 to the constriction portion of the claw shape 73, the larger gap is formed in the place corresponding to the constriction portion between the protrusion 78 and the edge of the through-hole made by the entry of the protrusion 78 in the housing container 6.

Accordingly, the claw shape 73 is set such that the protrusion 78 pierces through the housing container 6 to the constriction portion of the claw shape 73, and such that the gap formed in the place corresponding to the constriction portion becomes one in which the gas around the housing container 6 can be adsorbed to the gas-adsorbing material 60. Therefore, after the through-hole is made in the housing container 6 using the protrusion 78, even if the protrusion 78 is not separated from the housing container 6 but the protrusion 78 maintains the state in which the protrusion 78 enters the housing container 6, the gas-adsorbing device can sufficiently exert an original function using the gap after opening.

### (Tenth embodiment)

Fig. 17A is a side view illustrating a protrusion used in a gas-adsorbing device according to a tenth embodiment of the present invention, and Fig. 17B is a front view illustrating an example of the protrusion used in the gas-adsorbing device of the tenth embodiment when viewed from the point side.

In the tenth embodiment, the shape 79 of the protrusion 78 in the gas-adsorbing device 5g of the seventh embodiment is changed, and protrusion 78 is formed into a Phillips-head-driver shape 74. The tenth embodiment is identical to the seventh embodiment except the shape of 79 of the protrusion 78.

In the tenth embodiment, by the same effect as the eighth embodiment, after the protrusion 78 makes the through-hole in the housing container 6, even if the protrusion 78 is not separated from the housing container 6 but the protrusion 78 maintains the state in which the protrusion 78 enters the housing container 6, the gas-adsorbing device can sufficiently exert the original function after opening. Additionally, the cost is reduced because the protrusion can easily be formed into the Phillips-head-driver shape.

### (Eleventh embodiment)

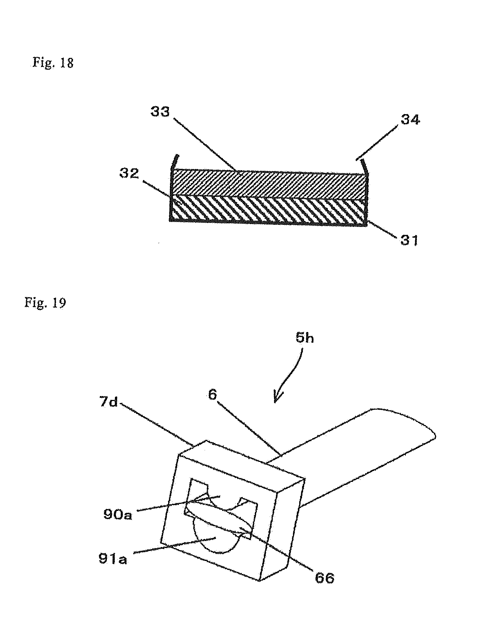

A comparative example of an eleventh embodiment of the present invention will first be described. Fig. 18 is a vertical sectional view illustrating an example of a gas-adsorbing device according to the comparative example of the eleventh embodiment. As illustrated in Fig. 18, the gas-adsorbing device of the comparative example includes a gas barrier open-top container 31, a first pellet 32, and a second pellet 33. The first pellet 32 is made from powders of a Ba-Li alloy getter material by compaction at pressures of about 30 to about 1000 bar, and accommodated in a lower portion of the open-top container 31. The second pellet 33 is made from desiccant powders, and the second pellet 33 is accommodated in an upper portion of the open-top container 31 so as to completely cover the first pellet 32 from above (the side of an opened unit of the open-top container 31).

In the gas-adsorbing device of the comparative example, a water content of the air that invades from the opened unit 34 of the open-top container 31 is adsorbed while passing through the second pellet 33, and the air in which the water content is adsorbed to the second pellet 33 is adsorbed to the first pellet 32.

Thus, using the configuration in which the second pellet 33 constituting the desiccant covers the first pellet 32 on the side of the opened unit 34 of the open-top container 31, the gas-adsorbing device of the comparative example can maintain the degree of vacuum in the closed space where the gas-adsorbing device is disposed while suppressing the early degradation of air-adsorbing performance of the getter material constituting the first pellet 32 due to the adsorption of the water content in the air.

However, in the configuration of the gas-adsorbing device of the comparative example, because the Ba-Li alloy getter material constituting the first pellet 32 has high affinity with the moisture (the water content in the air), it is necessary to completely remove the moisture (the water content in the air) from the air containing the mixed gas, such as oxygen and nitrogen, which is in contact with the first pellet 32 (the Ba-Li alloy getter material). Therefore, it is necessary that the first pellet 32 (the Ba-Li alloy getter material) on the side of the opened unit 34 of the open-top container 31 be covered with the second pellet 33 constituting the desiccant.

In case that the pellet-like desiccant (the second pellet 33) is cracked, the first pellet 32 (the Ba-Li alloy getter material) adsorbs the moisture (the water content in the air) to lose the activation. Therefore, during the use of the conventional gas-adsorbing device, it is necessary to carefully handle the gas-adsorbing device such that the Ba-Li alloy getter material does not adsorb the moisture (the water content in the air). In the gas-adsorbing device of the comparative example, because the getter material is compacted into the pellet shape, compared with the use of the powder getter material, the gas adsorption rate is slow due to the surface area exposed to the air.

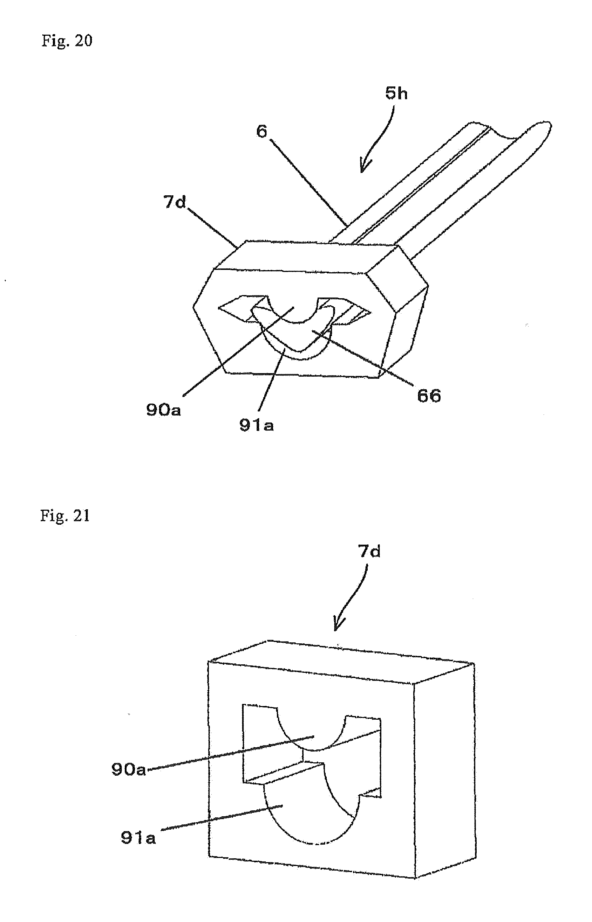

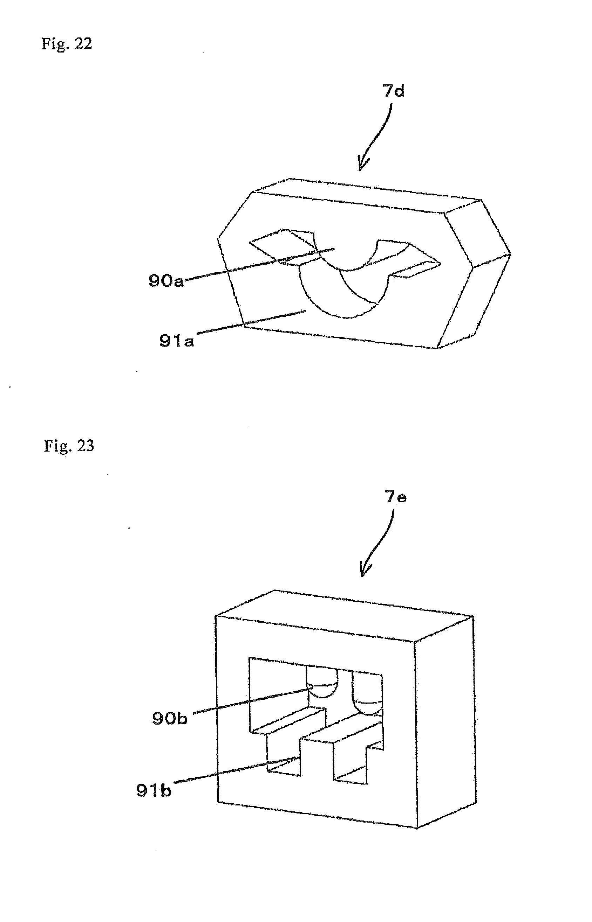

The eleventh embodiment of the present invention will be described below. Fig. 19 is a perspective view illustrating an unopened gas-adsorbing device according to the eleventh embodiment of the present invention, and Fig. 20 is a perspective view illustrating an example of a state in an opening operation of the gas-adsorbing device of the eleventh embodiment. Fig. 21 is a perspective view illustrating an opening member used in the gas-adsorbing device of the eleventh embodiment, and Fig. 22 is a perspective view illustrating an example of the state in the opening operation of the opening member used in the gas-adsorbing device of the eleventh embodiment.

As illustrated in Fig. 19, a gas-adsorbing device 5h of the eleventh embodiment includes the gas-adsorption material (not illustrated) made of copper-ion-exchanged ZSM-5 zeolite, the gas barrier aluminum housing container 6, the encapsulant (not illustrated), and a hard-resin opening member 7d. The housing container 6 has the flat, cylindrical shape in which an aperture 66 is provided at one end in the lengthwise direction, and the gas-adsorption material is accommodated in the housing container 6. The encapsulant (not illustrated) is disposed in the aperture 66 of the housing container 6, and made of the hard, gas barrier glass that closes the aperture 66. The opening member 7d has the through-hole having the inner diameter larger than the outer diameter of the cylindrical housing container 6. The opening member 7d can be deformed by the external force, and the opening member 7d is attached so as to surround the proximity of the aperture 66 of the housing container 6.

The opening member 7d includes a convex unit 90 and a concave unit 91. The convex unit 90 is provided in one of surfaces opposed to each other in the through-hole, and has a substantially semicircular shape in the section perpendicular to the through-hole. The concave unit 91 is provided in a portion opposed to the convex unit 90 in the other surface. The concave unit 91 has the surface that is substantially similar to and larger than that of the convex unit 90. The width of the concave unit 91 is larger than that of convex unit 90, and is smaller than the widths of the substantially flat surfaces opposed to each other in the proximity of the aperture 66 of the housing container 6. The housing container 6 is mounted (attached) such that the surfaces in which the convex unit 90 and the concave unit 91 are formed grips the substantially flat surfaces, which form the aperture 66 while being opposed to each other. The convex unit 90 and the concave unit 91 are continuously provided along the direction of the through-hole of the opening member 7d (the lengthwise direction of the housing container 6).

When the predetermined external force is applied to the opening member 7d in the direction in which the substantially flat surfaces, which form the aperture 66 while being opposed to each other, are gripped, the convex unit 90 and the concave unit 91 come close to each other, the encapsulant in the aperture 66 is broken by a bending force of the convex and concave shapes of the opening member 7d, and a space outside the container 6 and a space where the gas-adsorption material is accommodated are communicated with each other.

An operation of the gas-adsorbing device 5h of the eleventh embodiment having the above configuration will be described below.

As illustrated in Fig. 20, the opening member 7d deforms the encapsulant (not illustrated) in the aperture 66 in the case that the predetermined external force is applied to the opening member 7d in the direction in which the substantially flat surfaces, which form the aperture 66 while being opposed to each other, are gripped, namely, in the case that the compression external force is applied in the direction in Fig. 19. At this point, because the hard encapsulant made of glass is brittle, the encapsulant is broken by the deformation.

Particularly, as illustrated in Fig. 21, the opening member 7d of the eleventh embodiment includes the convex unit 90 and concave unit 91, which are opposed to each other, the convex and concave units have the semicircular columnar the shapes similarly to each other in the section of the opening member 7d in the lengthwise direction of the housing container 6, and the concave unit 91 is larger than the convex unit 90. The convex and concave sectional shapes are identical in the direction of the through-hole of the opening member 7d (the lengthwise direction of the housing container 6).

As illustrated in Fig. 22, the opening member 7d is compressed to engage the convex unit 90 and concave unit 91 with each other in the case that the predetermined external force is applied to the opening member 7d in the direction in which the substantially flat surfaces, which form the aperture 66 while being opposed to each other, are gripped, namely, in the case that the compression external force is applied in the direction in Fig. 21.

Accordingly, in the gas-adsorbing device 5h, in the case that the predetermined external force is applied to the opening member 7d in the direction in which the substantially flat surfaces, which form the aperture 66 while being opposed to each other, are gripped, the encapsulant in the aperture 66 of the housing container 6 is broken to open the aperture 66, and the gas-adsorption material 60 in the housing container 6 and the gas outside the housing container 6 are brought into contact with each other, which allows the gas-adsorption material 60 to adsorb the gas. Therefore, the remaining gas in the closed space is adsorbed when the device placed in the closed space such as the vacuum insulation panel is opened, or the gas in the closed space is continuously adsorbed for long periods, which allows the closed space to be kept at constant degree of vacuum.

As described above, the gas-adsorbing device 5h includes the gas-adsorption material (not illustrated), the gas barrier housing container 6, the gas barrier encapsulant (not illustrated), and the opening member 7d. The housing container 6 has the flat, cylindrical shape in which the aperture 66 is provided at one end in the lengthwise direction, and the gas-adsorption material is accommodated in the housing container 6. At least part of the gas barrier encapsulant (not illustrated) is disposed in the aperture 66, and the encapsulant closes the aperture 66. The opening member 7d includes the convex unit 90 and the concave unit 91. The convex unit 90 is provided in one of surfaces opposed to each other. The concave unit 91 is provided in the portion opposed to the convex unit 90 in the other surface. The housing container 6 is attached such that the surfaces in which the convex unit 90 and the concave unit 91 are formed grips the substantially flat surfaces, which form the aperture 66 while being opposed to each other.

In the gas-adsorbing device 5h, when the predetermined external force is applied to the opening member 7d in the direction in which the substantially flat surfaces, which form the aperture 66 while being opposed to each other, are gripped, the convex unit 90 and the concave unit 91 come close to each other, the bending force of the convex and concave shapes of the opening member 7d is applied to the encapsulant through the aperture 66, the encapsulant is deformed and broken, and the space outside the container 6 and the space where the gas-adsorption material is accommodated are communicated with each other.

In the configuration, the gas-adsorbing material is accommodated in the gas barrier aluminum housing container 6 including the aperture 66 at one end such that the gas-adsorbing material in the gas-adsorbing device 5h is not exposed to the air in the atmosphere until the gas-adsorbing device 5h is used in the gas adsorption, and the aperture 66 of the housing container 6 is sealed by the gas barrier glass encapsulant disposed in the aperture 66.

Until the gas-adsorbing device 5h is opened, the gas-adsorbing material in the gas-adsorbing device 5h is not in contact with the atmospheric air but covered with the gas barrier housing container 6 and the gas barrier encapsulant, so that the gas-adsorbing performance of the gas-adsorbing material is maintained.

The gas-adsorbing materials, such as copper-ion-exchanged ZSM-5 zeolite, which have the wide surface area exposed to the air and sufficient gas adsorption rate and gas-adsorbing performance while special working such as pressing is not performed, can be used as the gas-adsorbing material accommodated in the housing container 6.

In the case that the gas-adsorbing device 5h is used in the gas adsorption, the predetermined external force is applied to the opening member 7d that is attached so as to grip the two surfaces, which form the aperture 66 of the housing container while being opposed to each other, which allows the bending force of the convex and concave shapes of the opening member 7d to break the encapsulant in the aperture 66 to easily open the gas-adsorbing device.

The shapes and materials of the housing container 6, encapsulant, and opening member 7d are set such that the external force necessary for the opening is properly set, which allows the gas-adsorbing device to be prevented from being carelessly opened using the opening member 7d.

Accordingly, the gas-adsorbing device 5h is easily handled in the atmosphere, and the gas-adsorbing device 5h can easily be opened by applying the predetermined external force to the opening member 7d in the direction in which the substantially flat surfaces, which form the aperture 66 while being opposed to each other, are gripped,. After opening, the gas outside the housing container 6 in the space where the gas-adsorbing device 5h is disposed can be adsorbed to the gas-adsorbing material in the housing container 6 at the sufficient gas adsorption rate, and the degree of vacuum of the closed space where the gas-adsorbing device 5h is disposed can be maintained over a long term.

In the gas-adsorbing device 5h, the surface in which the convex unit 90 of the opening member 7d is substantially similar to the surface in which the concave unit 91 is formed, the concave unit 91 is larger than the convex unit 90, and the convex unit 90 is accommodated in the concave unit 91. Therefore, when the opening member 7d is compressed by the external force to engage the convex unit 90 and the concave unit 91 with each other, the gap that can deform the aperture 66 of the housing container 6 is formed between the concave unit 91 and the convex unit 90.

Because the convex unit 90 and the concave unit 91 have the substantially similar shapes, the force is applied to the whole housing container 6 that is sandwiched between the concave unit 91 and the convex unit 90. In the engagement state, the sealing portion of the gas-adsorbing device sealing unit is easily deformed by the substantially similar shapes of the convex unit 90 and concave unit 91.

In the gas-adsorbing device 5h, the convex unit 90 and concave unit 91 of the opening member 7d are continuously provided in the lengthwise direction of the housing container 6. Therefore, when the predetermined external force is applied to the opening member 7d, the proximity of the aperture 66 is evenly deformed and broken from the aperture 66 toward the deep side of the housing container 6 in the lengthwise direction. The space outside the housing container 6 and the space in which the gas-adsorption material is accommodated is easily communicated with each other by continuously and evenly breaking the proximity of the aperture 66 in the lengthwise direction.

The opening member 7d may be one that is attached so as to grip the surfaces, which form the aperture 66 of the housing container 6 while being opposed to each other, applies the predetermined external force to break the encapsulant in the aperture 66 by the bending force of the convex and concave shapes of the opening member 7d, and opens the gas-adsorbing device. It is necessary for the material for the opening member 7d to have the hardness that can deform the encapsulant using the aperture 66 of the housing container 6 to an extent that the encapsulant is broken. There is no particular limitation to the material for the opening member as long as the material has the hardness in the portion in which the force deforming the encapsulant using at least the aperture 66 of the housing container 6 is applied to the aperture 66 of the housing container 6. Preferably a resin is used as the material for the opening member from the viewpoint of easiness of forming the concave and convex shapes. There is no particular limitation to the shapes of the convex and concave units of the opening member 7d. For example, at least one set of semicircular columns, triangular prisms, or quadrangular prisms may be used. The convex and concave units may not necessarily have the substantially similar shape. Various modifications can also be made in the following embodiments.

### (Twelfth embodiment)

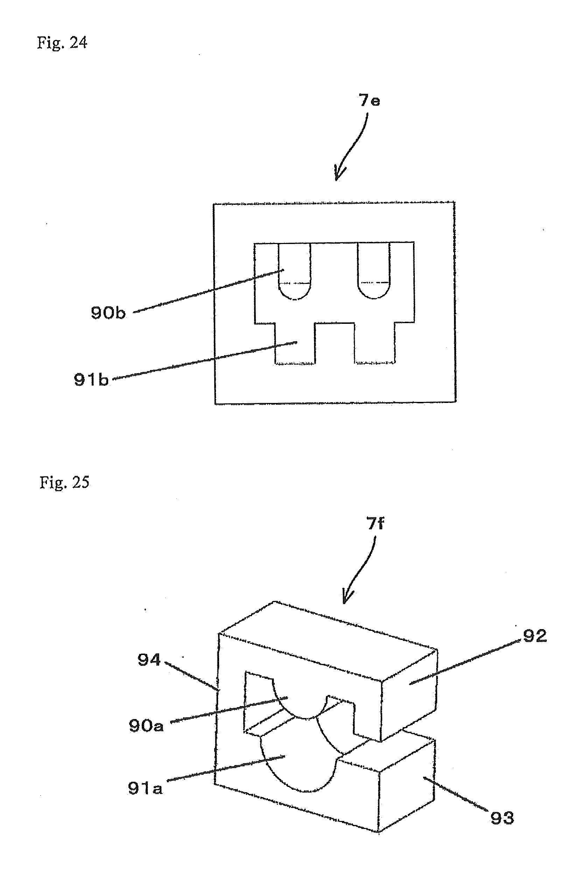

Fig. 23 is a perspective view illustrating an opening member used in a gas-adsorbing device according to a twelfth embodiment of the present invention, and Fig. 24 is a side view illustrating an example of the gas-adsorbing device of the twelfth embodiment when viewed from an aperture of the gas-adsorbing device in the lengthwise direction.

In the gas-adsorbing device of the twelfth embodiment, the shapes of the through-hole, convex unit 90, and concave unit 91 of the opening member 7d of the eleventh embodiment are changed, and other configurations are similar to those of the first embodiment.

In the gas-adsorbing device of the twelfth embodiment, two convex units 90 in each of which a hemisphere is attached to the front end of the column and two concave units 91 in each of which the shape in which the quadratic prism is cut off are used as illustrated in Figs. 23 and 24.

The twelfth embodiment differs from the eleventh embodiment in that the convex and concave units are not substantially similar to each other in the section of the opening member 7e in the lengthwise direction of the housing container 6, and that the convex and concave units do not have the identical shape. However, like the eleventh embodiment, an opening member 7e is compressed to engage the convex unit 90 and the concave unit 91 with each other in the case that the predetermined external force is applied to the opening member 7e in the direction in which the substantially flat surfaces, which form the aperture 66 while being opposed to each other, are gripped, namely, in the case that the compression external force is applied in the direction in Fig. 23. Therefore, the same effect as the eleventh embodiment is obtained.

### (Thirteenth embodiment)

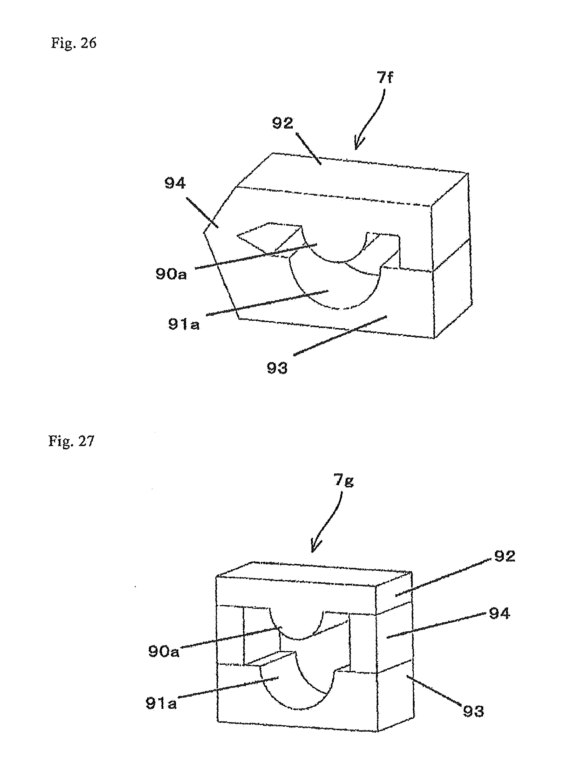

Fig. 25 is a perspective view illustrating an opening member used in a gas-adsorbing device according to a thirteenth embodiment of the present invention, and Fig. 26 is a perspective view illustrating an example of the state in the opening operation of the opening member used in the gas-adsorbing device of the thirteenth embodiment.

In the gas-adsorbing device of the thirteenth embodiment, the through-hole of the opening member 7d of the first embodiment is opened in a direction perpendicular to both the direction in which the surfaces , which form the aperture 66 while being opposed to each other, are gripped and the lengthwise direction of the housing container 6 such that the opening member 7d is formed into the substantial U-shape when viewed in the direction of the through-hole of the opening member 7d of the eleventh embodiment (the lengthwise direction of the housing container 6). Other configurations are identical to those of the eleventh embodiment.

In the thirteenth embodiment, the opening member 7d of the gas-adsorbing device of the eleventh embodiment is applied to a gas-adsorbing device 7f in Fig. 24 that is formed into the substantial U-shape when viewed in the lengthwise direction of the housing container 6, and a connection unit 94, which connects a push 92 in which the convex unit 90 is formed and a receiver unit 91 in which the concave unit 91 is formed, is provided only at one end of the gas-adsorbing device 7f.

That is, the opening member 7f of the thirteenth embodiment includes the push unit 92, the receiver unit 93, and the connection unit 94. The convex unit 90 is formed in the push unit 92, and the push unit 92 is opposed to one of the substantially flat surfaces, which form the aperture 66 while being opposed to each other. The concave unit 91 is formed in the receiver unit 93, the receiver unit 93 is opposed to the other surface. The connection unit 94 connects one end in the direction perpendicular to both the thickness direction of the aperture 66 in the push unit 92 and the lengthwise direction of the housing container 6 and one end in the direction perpendicular to both the thickness direction of the aperture 66 in the receiver unit 93 and the lengthwise direction of the housing container 6 such that the opening member 7f is formed into the substantial U-shape when viewed in the lengthwise direction of the housing container 6.

Like the eleventh embodiment, as illustrated in Fig. 25, the connection unit 94 connecting the push unit 92 and the receiver unit 93 is compressed to engage the convex unit 90 and concave unit 91 with each other in the case that the predetermined external force is applied to the opening member 7f in the direction in which the substantially flat surfaces, which form the aperture 66 while being opposed to each other, are gripped, namely, in the case that the compression external force is applied in the direction in Fig. 25.

At this point, the opening member 7f of the thirteenth embodiment has only one connection unit 94 connecting the push unit 92 in which the convex unit 90 is formed and the receiver unit 93 in which the concave unit 91 is formed. Therefore, compared with the eleventh embodiment in which the connection units 94 each of which connects the push unit 92 in which the convex unit 90 is formed and the receiver unit 93 in which the concave unit 91 is formed exist in at both the end of the opening member 7f, the connection unit 94 can be easily compressed in the direction in which the substantially flat surfaces, which form the aperture 66 while being opposed to each other, are gripped, and the convex unit 90 and concave unit 91 of the opening member 7f can more easily be engaged with each other.

Accordingly, in the gas-adsorbing device of the thirteenth embodiment, compared with the gas-adsorbing device of the eleventh embodiment, the encapsulant 7 in the aperture 66 of the housing container 6 is easily broken, and the aperture 66 is easy to open.

### (Fourteenth embodiment)

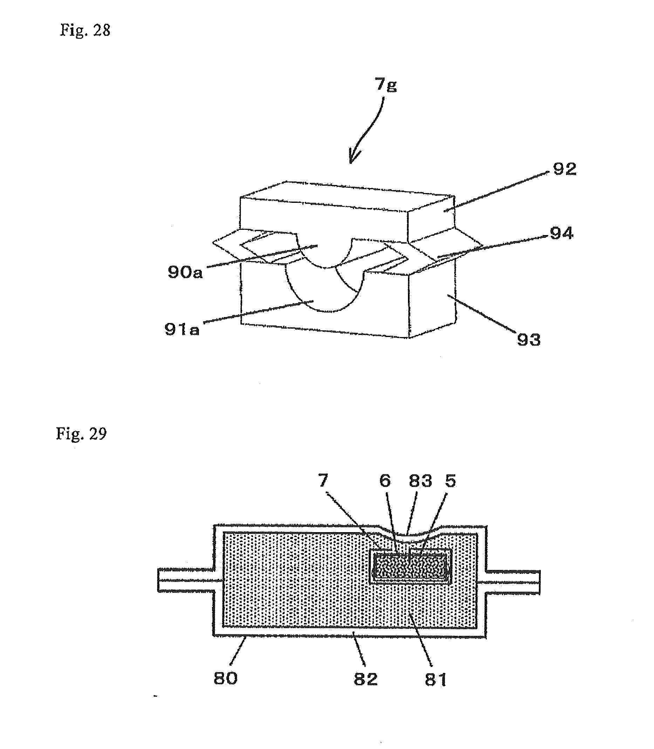

Fig. 27 is a perspective view illustrating an opening member used in a gas-adsorbing device according to a fourteenth embodiment of the present invention, and Fig. 28 is a perspective view illustrating the state in the opening operation of the opening member used in the gas-adsorbing device of the fourteenth embodiment.

In the fourteenth embodiment, only the material for the portion (the connection unit 94 connecting the push unit 92 in which the convex unit 90 is formed and the receiver unit 93 in which the concave unit 91 is formed) perpendicular to both the direction in which the substantially flat surfaces, which form the aperture 66 while being opposed to each other, are gripped and the lengthwise direction of the housing container 6 in the through-hole of the opening member 7d of the eleventh embodiment is changed to a resin having the hardness lower than that of other hard resins of the opening member 7g. Other configurations are similar to those of the eleventh embodiment.

That is, an opening member 7g of the fourteenth embodiment includes the push unit 92, the receiver unit 93, and the connection unit 94. The convex unit 90 is formed in the push unit 92, and the push unit 92 is opposed to one of the substantially flat surfaces, which form the aperture 66 while being opposed to each other. The concave unit 91 is formed in the receiver unit 93, the receiver unit 93 is opposed to the other surface. The connection unit 94 connects one end in the direction perpendicular to both the thickness direction of the aperture 66 in the push unit 92 and the lengthwise direction of the housing container 6 and one end in the direction perpendicular to both the thickness direction of the aperture 66 in the receiver unit 93 and the lengthwise direction of the housing container 6 such that the opening member 7g is formed into the substantial O-shape when viewed in the lengthwise direction of the housing container 6.

Like the eleventh embodiment, as illustrated in Fig. 28, the connection unit 94 connecting the push unit 92 in which the convex unit 90 is formed and the receiver unit 93 in which the concave unit 91 is formed is compressed so as to be bent inward and outward, and the convex unit 90 and concave unit 91 are engaged with each other, in the case that the predetermined external force is applied to the opening member 7g in the direction in which the substantially flat surfaces, which form the aperture 66 while being opposed to each other, are gripped, namely, in the case that the compression external force is applied in the direction in Fig. 27.

In the fourteenth embodiment, the connection unit 94 connecting the push unit 92 in which the convex unit 90 is formed and the receiver unit 93 in which the concave unit 91 is formed is made of the easily deformable resin having the hardness lower than that of other hard resins. Therefore, compared with the opening member 7d of the eleventh embodiment, the connection unit 94 can be easily compressed in the direction in which the substantially flat surfaces, which form the aperture 66 while being opposed to each other, are gripped, and the convex unit 90 and concave unit 91 of the opening member 7d can more easily be engaged with each other.

Accordingly, in the gas-adsorbing device of the fourteenth embodiment, compared with the gas-adsorbing device of the eleventh embodiment, the encapsulant 7 in the aperture 66 of the housing container 6 is easily broken, and the aperture 66 is easy to open.

### (Fifteenth embodiment)

Fig. 29 is a sectional view illustrating an example of a vacuum insulation panel according to a fifteenth embodiment of the present invention.

As illustrated in Fig. 29, a vacuum insulation panel 80 of the fifteenth embodiment is sealed under reduced pressure while a core material 81 and the gas-adsorbing device 5 of the first to fourth embodiments are covered with a coat material 82. The gas-adsorbing device 5 includes the housing container 6 in which the gas-adsorbing material is accommodated and the opening member 7 that is attached to the housing container 6. Fig. 29 illustrates the state in which a push mark 83 is formed in the place of the coat material 82 to which the external force is applied, when the opening member 7 is deformed by applying the external force, and when the vacuum insulation panel 80 is opened by making the through-hole in the housing container 6, after the vacuum insulation panel 80 is sealed under reduced pressure.

After the vacuum insulation panel 80 is sealed under reduced pressure, the positions where the housing container 6 and opening member 7 are placed emerge in the convex and concave shape on the coat material 82. Therefore, in the push mark 83 on the coat material 82, the external force is applied within a range necessary for the opening operation with the position where the opening member 7 is placed as a mark. That is, the external force is not applied to the whole of the housing container 6, and the push mark 83 covers part of the position where the housing container 6 is placed on the coat material 82.

A construction material of the vacuum insulation panel 80 will be described below.

The coat material 82 has the function of maintaining the degree of vacuum of the vacuum insulation panel 80. The coat material 82 is formed by laminating a thermal welding film of an innermost layer, a gas barrier film of an intermediate layer in which a metallic foil or a resin film to which metallic atoms are evaporated is used, and a surface protective film of an outermost layer.

There is no particular limitation to the thermal welding film. Thermoplastic resins, such as a low-density polyethylene film, a straight-chain low-density polyethylene film, a high-density polyethylene film, a polypropylene film, and a polyacrylonitrile film, or a mixture thereof can be used as the thermal welding film. Metallic foils such as an aluminum foil and a copper foil and a film in which metals such as aluminum and copper or metal oxide is evaporated on a polyethylene terephthalate film or an ethylene-vinyl alcohol copolymer can be used as the gas barrier film.

Well-known materials such as a nylon film, a polyethylene terephthalate film, and a polypropylene film can be used as the surface protective film.

There is no particular limitation to a method for producing the vacuum insulation panel. For example, the following producing method can be cited. First, one laminate film is folded, the thermal welding films located at the end portions of the laminate films opposed to each other are thermally welded to obtain a pouched laminate film, a core material is inserted in the laminate film, and the thermal welding films located in the aperture of the pouched laminate film are welded under reduced pressure. Secondly, two laminate films are disposed so as to be opposed to each other, the thermal welding films located at the end portions of the laminate films are thermally welded to obtain the pouched laminate film, the core material is inserted in the pouched laminate film, and the thermal welding films located near the aperture of the pouched laminate film are welded under reduced pressure.

The core material 81 has the function of becoming the frame of the vacuum insulation panel 80 to form the vacuum space. There is no particular limitation to the material for the core material 81. Well-known materials including inorganic fibers such as a glass wool, a rock wool, an alumina fiber, and a metallic fiber and a polyethylene terephthalate fiber can be used as the core material 81. In the case that the metallic fiber is used, the metallic fiber made of metal having a relatively excellent thermal conductivity is not preferable to the core material 81.

Preferably the low-cost glass wool having the high fiber elasticity and the low fiber thermal conductivity is used as the core material 81. Because the thermal conductivity of the vacuum insulation panel tends to decrease with decreasing diameter of the fiber, the fiber having the smaller diameter is preferably used. However, fiber having the smaller diameter does not become widespread, possibly cost increase of the fiber is generated.

Accordingly, as the fiber for the vacuum insulation panel 80, an aggregate of glass wool which is commonly used, relatively inexpensive, and has an average fiber diameter of about 3 to 6 µm is desirable.

The gas-adsorbing material has the function of adsorbing the mixed gas, such as the air and moisture, which remains in or invades into the closed space such as the vacuum insulation panel. There is no particular limitation to the gas-adsorbing material. For example, a chemical adsorbent such as calcium oxide and magnesium oxide, a physical adsorbent such as zeolite, and a mixture thereof can be used as the gas-adsorbing material. Additionally, copper-ion-exchanged ZSM-5 zeolite having a chemical adsorption property and a physical adsorption property may be used.

The housing container 6 has the property that does not pass the gas such as air and moisture, and has the function of not exposing the gas-adsorbing material to the atmosphere.

There is no particular limitation to the material for the housing container 6. The same laminate film as the coat material can be used, and any material may be used as long as the material retains the gas-adsorbing material, which is sealed under reduced pressure, without exposing the gas-adsorbing material to the external air.

There is no particular limitation to the shape of the housing container 6. Any material may be used as long as the material retains the gas-adsorbing material, which is sealed under reduced pressure, without exposing the gas-adsorbing material to the external air.

As described above, the gas-adsorbing device 5 of the embodiments can sufficiently exert the original function, so that the vacuum insulation panel 80 can maintain the high degree of vacuum for long periods to have the high heat insulating performance.

It is clear for those skilled in the art to make various improvements and other embodiments of the present invention. Accordingly, it is understood that the description is interpreted as an illustration, and that description is provided to those skilled in the art in order to instruct the best mode of the present invention. Various changes and modifications can be made without departing from the spirit of the present invention.

### Industrial Applicability

The gas-adsorbing device of the present invention can be applied to devices, such as the vacuum insulation panel, a vacuum insulating container, a plasma display, and a fluorescent light tube, in which the vacuum needs to be maintained. Additionally, the vacuum insulation panel of the present invention can be applied to the devices, such as a refrigerator, an automatic vending machine, a hot-water supply tank, a heat insulation panel for building, a heat insulation panel for automobile, and a cooler/heat-retention box, in which the heat insulation performance needs to be maintained.

### Reference Signs List

5, 5a, 5b, 5c, 5d, 5e, 5f, 5g... gas-adsorbing device
6, 6a, 6b, 6c... housing container
7, 7a, 7b, 7c, 7d, 7e, 7f, 7g... opening member
8... retention unit
8a... bottom unit
8b, 8c... lateral unit
8d... upper surface unit
9... movable unit
10... protrusion
11... through-hole
12... first protrusion
13... second protrusion
14... third protrusion
15... triple through-hole
16... housing-container thin unit
17... housing-container thick unit
18... tapered end
19... wide unit
60... gas-adsorbing material
62a, 62b... sealing unit
63... contact unit
64... constriction unit
65... housing unit
66... aperture
71... spiral groove
72... cutting edge
73... claw shape
74... Phillips-head-driver shape
78... protrusion
79... shape
80... vacuum insulation panel
81... core material
82... coat material
83... push mark
90a, 9b... convex unit
91a, 91b... concave unit
92... push unit
93... receiver unit
94... connection unit

## Claims

1. A gas-adsorbing device comprising: a gas barrier housing container having a long and narrow, flat, cylindrical body in which a gas-adsorbing material is sealed under reduced pressure; and
an opening member that is attached so as to go around the housing container about an axis in a lengthwise direction of the housing container, the opening member including a pressing unit that presses the housing container.

2. A gas-adsorbing device comprising: a gas-adsorbing material;
a gas barrier housing container having a long and narrow, flat, cylindrical body in which the gas-adsorbing material is sealed under reduced pressure; and
an opening member that is attached so as to go around the housing container about an axis in a lengthwise direction of the housing container, the opening member including a protrusion that makes a through-hole in the housing container,
wherein the opening member includes:
a retention unit that grips an outer circumferential surface of the cylindrical body in a width direction of the housing container, the retention unit circumferentially surrounding the outer circumferential surface of the cylindrical body so as to cover at least a portion, on which the protrusion entering the housing container has a possibility to abut from an inside of the housing container, in a surface on an opposite side to a surface in which the through-hole is made; and
a movable unit in which a fixed end is coupled to the retention unit, the protrusion being formed at a free end of the movable unit, and
the movable unit is, before opening, opposed to the surface in which the through-hole is made at some interval while inclined at a predetermined angle, when the retention unit grips the housing container in the width direction, and the protrusion pierces through the surface in which the through-hole is made, when the movable unit is pushed by a predetermined force during opening in a direction in which the protrusion comes close to the surface in which the through-hole is made.

3. The gas-adsorbing device according to claim 2, wherein the opening member is constructed by an elastically-deformable and bending-workable flat plate in which one end constituting the free end has a pointed shape, and
the retention unit is formed so as to circumferentially surround the outer circumferential surface of the cylindrical body by bending the flat plate in midstream from the other end of the flat plate toward one end, and the protrusion is formed by inwardly bending a portion having the pointed shape at a base of the portion having the pointed shape.

4. The gas-adsorbing device according to claim 2 or 3, comprising the plurality of protrusions in a lengthwise direction of the housing container.

5. The gas-adsorbing device according to any one of claims 2 to 4, wherein the housing container is formed into a tapered shape such that an outer diameter of at least one end of the housing container is smaller than an inner diameter in a portion of the housing container where the retention unit grips the housing container in the width direction.

6. The gas-adsorbing device according to any one of claims 2 to 5, wherein the inner diameter on one side in the lengthwise direction of the housing container is widened in the portion of the housing container where the retention unit grips the housing container in the width direction.

7. The gas-adsorbing device according to any one of claims 1 to 6, wherein the protrusion has a shape such that a gap in which gas around the housing container is adsorbed to the gas-adsorbing material can be formed between the protrusion and an edge of the through-hole, which is made in a manner such that the protrusion enters the housing container, even if a state in which the protrusion enters the housing container is maintained.

8. The gas-adsorbing device according to claim 7, wherein an outer circumferential surface of the protrusion includes a spiral convex unit or a spiral groove.

9. The gas-adsorbing device according to claim 7, wherein the protrusion includes a plurality of cutting edges that are radially arrayed.

10. The gas-adsorbing device according to claim 7, wherein the protrusion has a claw shape.

11. The gas-adsorbing device according to claim 7, wherein the protrusion has a Phillips-head-driver shape.

12. A gas-adsorbing device comprising: a gas-adsorption material;
a gas barrier housing container in which the gas-adsorption material is accommodated, the housing container having a substantially flat cylindrical shape in which an aperture is provided at one end in a lengthwise direction;
a gas barrier encapsulant that closes the aperture while at least part of the encapsulant is disposed in the aperture; and
an opening member that includes at least one convex unit in one of surfaces opposed to each other and at least one concave unit in a portion opposed to the convex unit in the other surface, the opening member being attached to the housing container such that surfaces, which form the aperture while being opposed to each other, are gripped by the surfaces in which the convex unit and the concave unit are formed,
wherein, when a predetermined external force is applied to the opening member in a direction in which the surfaces, which form the aperture while being opposed to each other, are gripped, the convex unit and the concave unit come close to each other, the encapsulant is broken by a bending force of convex and concave shapes of the opening member, and a space outside the container and a space where the gas-adsorption material is accommodated are communicated with each other.

13. The gas-adsorbing device according to claim 12, wherein the surface in which the convex unit is formed is substantially similar to the surface in which the concave unit is formed, and the concave unit is larger than the convex unit.

14. The gas-adsorbing device according to claim 12 or 13, wherein the convex unit and the concave unit are continuously provided along the lengthwise direction of the container.

15. The gas-adsorbing device according to any one of claims 12 to 14, wherein the opening member includes:
a push unit that is opposed to one of the surfaces, which form the aperture while being opposed to each other;
a receiver unit that is opposed to the other surface; and
a connection unit that connects one end of the push unit in a direction perpendicular to both a thickness direction of the aperture and the lengthwise direction of the container and one end of the receiver unit in the direction perpendicular to both the thickness direction of the aperture and the lengthwise direction of the container such that the opening member becomes a substantial U-shape when viewed in the lengthwise direction of the container.

16. The gas-adsorbing device according to any one of claims 12 to 14, wherein the opening member includes:
a push unit that is opposed to one of the surfaces, which form the opening unit while being opposed to each other;
a receiver unit that is opposed to the other surface; and
a connection unit that connects both ends of the push unit in the direction perpendicular to both the thickness direction of the aperture and the lengthwise direction of the container and both ends of the receiver unit in the direction perpendicular to both the thickness direction of the aperture and the lengthwise direction of the container such that the opening member becomes a substantial O-shape when viewed in the lengthwise direction of the container, and
the connection unit is made of a material that is easily bent compared with the push unit and the receiver unit.

17. A vacuum insulation panel comprising: a core material; and the gas-adsorbing device according to any one of claims 1 to 16, wherein the core material and the gas-adsorbing device are covered with a gas barrier coat material, and a pressure of an inside of the coat material is reduced.
